# EUROPEAN PATENT SPECIFICATION

(11) **EP 2 009 070 B1**
(45) Date of publication and mention of the grant of the patent: **24.11.2010**
(21) Application number: 08011706.2
(22) Date of filing: 27.06.2008
(51) Int. Cl.: C09D 11/00

(54) **Ink-jet ink and method of producing the same, color filter and method of producing the same, display device, and method of forming functional film**
Tintenstrahltinte und Herstellungsverfahren dafür, Farbfilter und Herstellungsverfahren dafür, Anzeigevorrichtung und Verfahren zur Bildung einer funktionellen Folie
Encre pour jet d'encre et son procédé de production, filtre couleur et son procédé de production, dispositif d'affichage et procédé de formation d'un film fonctionnel

(30) Priority: 29.06.2007 JP 2007173430
(43) Date of publication of application: 31.12.2008
(73) Proprietor: FUJIFILM Corporation, Minato-ku Tokyo (JP)
(72) Inventor: Wachi, Naotaka, Fujinomiya-shi, Shizuoka-ken, (JP); Fujimoto, Shinji, Fujinomiya-shi, Shizuoka-ken, (JP); Okabe, Koutaro, Haibara-gun, Shizuoka (JP)
(74) Representative: HOFFMANN EITLE

(56) References cited:
- EP-A- 1 371 697
- WO-A-00/36030
- US-A- 5 129 948
- US-A1- 2004 063 809
- US-A1- 2006 279 619

## Description

### BACKGROUND OF THE INVENTION

### Field of the Invention

The present invention relates to an ink-jet ink suitable for depositing ink droplets on a non-penetrative substrate by using an ink-jet system and a method of producing the same, a color filter using the ink-jet ink and a method of producing the same, a display device, and a method of forming a functional film.

### Description of related art

In recent years, with advancement of personal computers, especially wide-screen liquid crystal televisions, a demand for liquid crystal displays, in particular for liquid crystal color displays tend to increase. Because the liquid crystal color displays are expensive, a demand for cost reduction has been growing. In particular, a cost reduction demand for color filters that share a large part of the cost is high.
The color filters generally have patterns of three primary colors, red (R), green (G), and blue (B). An electrode corresponding to each of the pixels of R, G, and B is switched on and off, so that a liquid crystal works as a shutter, whereby a color image is displayed by transmission of light through the respective pixels of R, G, and B.
Examples of conventional methods for producing a color filter include a dyeing method. In the dyeing method, a water-soluble polymer material to be dyed is first formed on a glass substrate; the polymer material is patterned in a predetermined form through a photolithographic process; and then the resulting pattern is immersed in a dyeing bath so as to obtain a colored pattern. These steps are repeated three times, so that a color filter composed of R, G, and B patterns is formed.
Further, other examples of the methods include a pigment dispersing method. In this method, first, a photosensitive resin layer in which a pigment is dispersed is formed on a substrate; and then the resulting layer is patterned to obtain a single color pattern. These steps are repeated three times, so that a color filter composed of R, G, and B patterns is formed.
Still further, examples of other methods include an electrodeposition method and a method in which a pigment is dispersed in a thermosetting resin; printing is repeated three times to print R, G, and B; and then the resin is cured by heating.

However, each of the methods requires, for providing the three colors of R, G, and B, repeating the same steps three times, and has a problem of high cost or a problem of low yield due to the repetition of the same steps. As a method of producing a color filter that addresses these problems, there has been proposed a method of forming a color layer (pixels) by spraying a color ink by using an ink-jet system (refer to, for example, Japanese Patent Application Laid-Open (JP-A) No. 59-75205 and JP-A No. 2004-339332).

In the foregoing method of producing a color filter by using the ink-jet system, pixels are formed by ejecting inks, respectively colored in R, G, or B, onto recessed portions comparted with a light shielding partition wall. In this process, in order to prevent flooding of the ink out of the recessed portions, ink-repellent treatment is applied to the surface of the partition wall. Examples of the ink-repellent treatment include a process in which after a partition wall without ink-repellent property is formed, the surface of the partition wall is plasma-treated with a fluorine gas (for example, JP-A No. 2002-372921). However, when the ink-repellent treatment is applied to the surface of the partition wall, pixel regions where pixels are formed are also affected by the fluorine plasma. As a result, the ink-wettability thereof is lowered and the corners of each pixel region are not sufficiently wetted with the ink, thereby causing a problem of uncolored portions. As a method of improving the wettability of the pixel regions, there have been proposed, for example, a process in which the ink-repellent treatment is applied before the pattern of the partition wall is formed, and then a pattern exposure and development are conducted, so that the pixel regions are not affected directly by the ink-repellent treatment, or a process in which an ink-repellent material is added in the light shielding partition wall beforehand, and the ink-repellent material is moved to the surface by heating so as to impart an ink-repellent property without the fluorine plasma treatment (refer to JP-A No. 2007-47441 and JP-A No. 7-35915, for example).

Further, as a method of improving the ink wettability of the pixel regions, there has been also proposed a method of adding a fluoro-surfactant that lowers the surface tension of an ink-jet ink, or a method of adding an alkane to the ink (refer to JP-A No. 2007-3945 and JP-A No. 2006-284752, for example).

EP A-1 137 697 A2 and US 2004/063809 A1 relate to an inkjet ink binder including polymeric nanoparticles ("PNPs") having a mean diameter in the range of 1 to 50 nanometers, wherein the PNPs include as polymerized units 1-20%, by weight based on dry polymer weight, of a curable composition. The reaction of the curable composition can be initiated thermally, chemically or via actinic radiation. An inkjet ink composition comprising a liquid medium, a colorant and the inkjet binder and a method for improving the durability of inkjet ink printed on a substrate are also provided.

US A-5 129 948 relates to an ink composition comprising a liquid carrier, a colorant, and a polyalkyleneimine /alkylene oxide block copolymer.

US 2006/279619 A1 relates to a layer of material that binds to the next material to be printed is applied. In an embodiment this material is a resin containing a porous silica. The number of printing passes and amount of liquid accumulation is reduced by selecting ingredients of the ink to act both as a humectant and as a layer former, which permits the ink to have high amounts of active ingredient. In an implementation, two materials, the first an ink depositing amine and the second an ink depositing epoxy, are printed separately. They react in situ to form a single, dielectric layer..

WO 00/36030 A relates to a composition comprising a water-dissipatable polymer, dye, surfactant, water and organic solvent, wherein the surfactant comprises: (a) a surfactant having a sulpho or sulphate group; or (b) a non-ionic surfactant free from carbon-carbon triple bonds; or (c) a mixture of (a) and (b). The compositions are useful as an ink jet printing inks or as a concentrates from which such inks may be prepared.

### SUMMARY OF THE INVENTION

However, the foregoing methods of improving the wettability of the pixel region have problems in that the development property upon formation of a pattern may be unsatisfactory or the ink-wettability in the pixel regions is lowered due to transferring of the ink-repellent material to the pixel region by an action of heat in the heating process. Further, there has been also proposed a method of applying an ink-affinity treatment such as an oxygen ashing treatment after the ink-repellent treatment. This method improves the wettability of the pixel regions, but still has a problem of lowering the ink-repellent property of the partition wall portions at the same time.

The aforementioned addition of fluoro-surfactant or alkane is not fully satisfactory because it still has a problem of not providing sufficient effect or easily producing foams in the ink.

The present invention has been made in view of the aforementioned conventional problems. It is an object of the present invention to provide an ink-jet ink and a method of producing the ink-jet ink; the ink-jet ink exhibits an excellent wettability to a non-penetrative substrate when it is ejected to the substrate, for example, when ink droplets are deposited by using the ink-jet system on recessed portions on the substrate comparted with ink-repellent partition walls, the ink-jet ink can prevent the development of color irregularities and the generation of non-colored portions at the corners of each recessed portion. It is another object of the present invention to provide a color filter in which color irregularities and generation of non-colored portions are suppressed, and a method of producing the color filter. It is still another object of the present invention to provide a display device. It is still another object of the present invention to provide a method of forming a functional film, by which a uniform functional film can be formed by using the ink-jet system. The present invention addresses these objectives.

The present invention, as a result of intensive studies, has been accomplished based on the following findings: an ink-jet ink having an adequate wettability to a region on a substrate (the surface of the substrate, the surface of an underlying layer when the substrate has the underlying layer, or the like) at which a functional film (color pixels, for example) is to be formed can be obtained by using a compound having a specific structure as a wettability enhancer; and the ink-jet ink works effectively in the production of a functional film such as a color filter in which color irregularities and generation of non-colored portions are prevented.

Namely, specific measures for addressing the above problems are as follows.
A first aspect of the invention provides an ink-jet ink used for forming a functional film by ejecting an ink droplet to a non-penetrative substrate using an ink-jet system, the ink-jet ink comprising a compound having an amino group and an alkylene glycol portion within a molecule, wherein the compound serves as a wettability enhancer.
A second aspect of the invention provides an ink-jet ink of the first aspect, wherein the alkylene glycol portion is ethylene glycol and/or propylene glycol.

A third aspect of the invention provides an ink-jet ink of the first or second aspect, wherein the compound is an open-ring copolymer of ethylene oxide and/or propylene oxide having an amino group at a terminal.
A fourth aspect of the invention provides an ink-jet ink of any one of the first to third aspects, wherein the amino group is represented by the following Formula (1): 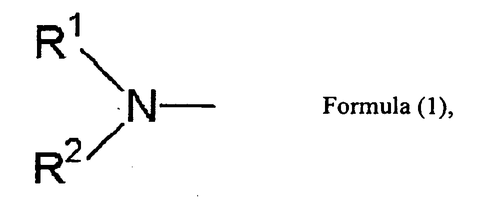 wherein, in Formula (1), R¹ and R² each independently represent a hydrogen atom, an alkyl group having 1 to 8 carbon atoms, an aralkyl group having 7 to 15 carbon atoms, an aryl group having 6 to 15 carbon atoms, an alkenyl group having 1 to 8 carbon atoms, or an alkynyl group having 1 to 8 carbon atoms, each of which may be substituted by an alkyl group having 1 to 4 carbon atoms, a halogen atom, or an alkoxy group having 1 to 4 carbon atoms; and R¹ and R² may be connected by an alkylene group or an alkoxyalkylene group to form a ring structure.

A fifth aspect of the invention provides an ink-jet ink of any one of the first to fourth aspects, further comprising a solvent and a colorant.
A sixth aspect of the invention provides an ink-jet ink of the fifth aspect, wherein at least 70% by mass of the total amount of the solvent is an alkane diol derivative represented by the following Formula (2):

Formula (2): A-O-(CₘH₂ₘ-O)ₙ-B,

wherein, in Formula (2), m represents an integer of from 2 to 7; n represents an integer of from 1 to 4; A and B each independently represent a hydrogen atom, an alkyl group, having 1 to 4 carbon atoms, or an acetyl group; the total number of the carbon atoms of the derivative is 12 or less; A and B may be the same or different; and A and B are not simultaneously hydrogen atoms.

A seventh aspect of the invention provides an ink-jet ink of the fifth or sixth aspect, wherein 70% by mass or more of the total amount of the solvent is a solvent having a boiling point of 220°C or higher under normal temperature and pressure of 25°C and 760 mmHg.
An eighth aspect of the invention provides an ink-jet ink of any one of the fifth to seventh aspects, wherein the colorant is a pigment.

A ninth aspect of the invention provides an ink-jet ink of the eighth aspect, wherein the pigment is at least one selected from the group consisting of C. I. Pigment Red 254, C. I. Pigment Red 177, C. I. Pigment Yellow 150, C. I. Pigment Green 36, C. I. Pigment Green 7, C. I. Pigment Blue 15:6, and C. I. Pigment Violet 23.
A tenth aspect of the invention provides an ink-jet ink of the eighth or ninth aspect, wherein the number average particle size of the pigment is in a range of from 10 nm to 100 nm.
An eleventh aspect of the invention provides an ink-jet ink of any one of the first to tenth aspects, further comprising a polymerizable monomer, wherein the polymerizable monomer is at least one selected from the group consisting of a (meth)acrylic monomer, an epoxy monomer, and an oxetanyl monomer.

A twelfth aspect of the invention provides an ink-jet ink of any one of the first to eleventh aspects, further comprising a pigment dispersant.
A thirteenth aspect of the invention provides an ink-jet ink of any one of the first to twelfth aspects, wherein the viscosity of the ink-jet ink is from 5 mPa·s to 50 mPa·s at 25°C.
A fourteenth aspect of the invention provides an ink-jet ink of any one of the first to thirteenth aspects, wherein the surface tension of the ink-jet ink is from 15 mN/m to 40 mN/m at 25°C.
A fifteenth aspect of the invention provides an ink-jet ink of any one of the first to fourteenth aspects, wherein the ink-jet ink is used to form a color filter by ejecting ink droplets using an ink-jet system onto recessed portions comparted with partition walls formed on a substrate, and at least a part of the functional film is a color film.

A sixteenth aspect of the invention provides a method of producing a color filter comprising:
ejecting the ink-jet ink of any one of the first to fifteenth aspects using an ink-jet system onto recessed portions comparted with partition walls formed on a substrate so as to form a functional film.
A seventeenth aspect of the invention provides a method of producing a color filter of the sixteenth aspect, wherein the partition walls have ink-repellency.
An eighteenth aspect of the invention provides a method of producing a color filter of the sixteenth or seventeenth aspect, further comprising, after ejecting the ink-jet ink onto the recessed portions using an ink-jet system, removing at least a part of an organic solvent contained in the ink-jet ink, and then polymerizing and curing the functional film by irradiation with an active energy ray and/or heating.

A nineteenth aspect of the invention provides a color filter prepared by the method of producing a color filter of any one of the sixteenth to eighteenth aspects.
A twentieth aspect of the invention provides a display device comprising the color filter of the nineteenth aspect.
A twenty-first aspect of the invention provides a method of producing the ink-jet ink of any one of the first to fifteenth aspects, wherein the compound having an amino group and an alkylene glycol portion within a molecule is added after dispersing a pigment.
A twenty-second aspect of the invention provides a method of forming a functional film comprising:
ejecting the ink-jet ink of any one of the first to fifteenth aspects onto a non-penetrative substrate using an ink-jet system; and
evaporating at least a part of a solvent, so as to form a functional film.

According to the present invention, an ink-jet ink and a method of producing the ink-jet ink can be provided. The ink-jet ink exhibits an excellent wettability to a non-penetrative substrate when it is ejected to the substrate; for example, when ink droplets are deposited by using an ink-jet system on recessed portions on the substrate comparted with ink-repellent partition walls, the ink-jet ink can prevent the occurrence of color irregularities and also prevent the generation of non-colored portions at the corners of each recessed portion.
Further, according to the present invention, a color filter can be provided in which color irregularities and occurrence of non-colored portions are suppressed, as well as a method of producing the color filter and a display device.
Still further, according to the present invention, a method of forming a functional film can be provided by which a uniform functional film is formed by using an ink-jet system.

### DETAILED DESCRIPTION OF THE INVENTION

What will be explained in detail hereinafter are the components of an ink-jet ink according to the present invention, a method of producing the ink-jet ink, a color filter using the ink-jet ink, a method of producing the color filter, a display device, and a method of forming a functional film.

### Ink-Jet Ink and Production Method Thereof

First, an ink-jet ink of the present invention and a method of producing the ink-jet ink are explained in detail.
The ink-jet ink of the present invention is used in such a process in which a liquid is ejected onto a non-penetrative substrate by using an ink-jet system, so as to form a functional film. The ink-jet ink of the present invention includes at least a wettability enhancer, and the wettability enhancer has an amino group and an alkylene glycol portion. A preferred ink-jet ink of the present invention may further include a colorant, a solvent, a polymerizable monomer, and a pigment dispersant. If necessary, other additives may be further added.

The ink-jet ink of the present invention, due to the aforementioned composition, exhibits an excellent wettability to a non-penetrative substrate (for example, when partition walls are formed on the substrate, a substrate surface or a surface of a layer formed on the substrate at recessed portions comparted with the partition walls), and an excellent wet-spreading property on the substrate. Thereby, the occurrence of color irregularities and the generation of non-colored portions are prevented, and a color filter prepared by using the ink-jet ink exhibits an excellent display quality.

### Wettability Enhancer

The ink-jet ink of the present invention includes at least one kind of wettability enhancer (hereinafter, also refer to as "wettability enhancer according to the present invention") that has at least an amino group and an alkylene glycol portion, wherein the amino group is represented by formula (1).
The proportion of the wettability enhancer to the ink-jet ink is preferably from 0.01 % to 20% by mass with respect to the total (mass) of the ink-jet ink, more preferably from 0.05% to 10% by mass, and still more preferably from 0.1% to 5% by mass. When the proportion of the wettability enhancer is 0.01 % by mass or more, the effect of the wettability enhancer can be easily exerted, and an adequate wet-spreading property to the non-penetrative substrate can be attained. On the other hand, when the proportion is 20% by mass or less, the proportion of the wettability enhancer in a functional film (pixels, for example) obtained after removal of the solvent can be reduced, so that a sufficient hardness required for a functional film (for example, as pixels in a color filter) can be attained.

The alkylene glycol portion of the wettability enhancer according to the present invention is easily available in the form of a compound, and is preferably ethylene glycol and/or propylene glycol in view of cost efficiency. Further, the wettability enhancer according to the present invention is preferably an open-ring copolymer of ethylene oxide and/or propylene oxide having an amino group at a terminal thereof from the viewpoint of making better the wettability to the non-penetrative substrate.

In the open-ring copolymer, the ratio of an ethylene glycol portion (EG) to an propylene glycol portion (EG : PG) is not particularly limited, but can be an arbitrary ratio in the range of from 0:100 to 100:0. Above all, from the viewpoint of solubility to solvent and others, it is preferable that the copolymer includes both of the ethylene glycol portion and the propylene glycol portion. Specifically, for the same reason, the ratio of EG : PG is preferably from 1:10 to 10:1 and more preferably from 1:5 to 5:1.

The amino group is represented by the following Formula (1) from the viewpoint of making better the wettability to the non-penetrative substrate.

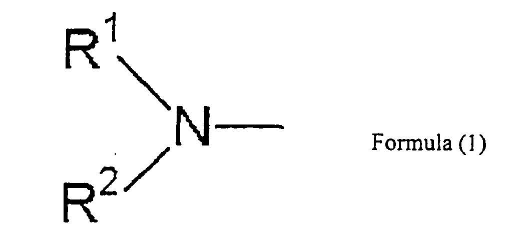

In the foregoing Formula (1), R¹ and R² each independently represent an alkyl group having 1 to 8 carbon atoms, an aralkyl group having 7 to 15 carbon atoms, an aryl group having 6 to 15 carbon atoms, an alkenyl group having 1 to 8 carbon atoms, or an alkynyl group having 1 to 8 carbon atoms. These groups may be substituted by an alkyl group having 1 to 4 carbon atoms, a halogen atom such as Cl, Br, and F or an alkoxy group having 1 to 4 carbon atoms. Further, R¹ and R² may be connected by an alkylene group or an alkoxyalkylene group to form a ring structure.

R¹ and R² are not particularly limited as long as they are selected from the above range, but among them, an amino group derived from a secondary amine of R¹R²NH that is generally available in the market is preferably selected because of its easy availability and high cost efficiency. Specific examples of preferable amino groups may include N,N-dimethylamino, N,N-diethylamino, N,N-di-n-propylamino, N,N-di-n-butylamino, N,N-di-n-pentylamino, N,N-di-n-hexylamino, N-ethyl-N-n-propylamino, N-ethyl-N-i-amylamino, N-ethyl-N-2-ethylhexylamino, N,N-di-(ethoxyethyl) amino, N,N-dibenzylamino, N-ethyl-N-benzylamino, pyrrolidino, piperidino, and morphorino groups, but are not limited to these groups. Among these, from the viewpoint of versatility and cost efficiency, a N,N-diethylamino or N,N-di-n-propylamino group is particularly preferable.

When the wettability enhancer is an open-ring copolymer of ethylene oxide and/or propylene oxide having an amino group at a terminal, the open-ring copolymer can be produced by performing an open-ring copolymerization through a conventional process using the foregoing secondary amine in the presence of ethylene oxide and/or propylene oxide.

The molar ratio (Am : Rox) of an amino group (Am) to an alkylene oxide portion (Rox) in the open-ring copolymer is preferably from 1:5 to 1:100, more preferably from 1:10 to 1:80, and still more preferably from 1:15 to 1:60. When the molar ratio of the amino group to the alkylene oxide portion is 1:5 or lower, the content of low molecular weight components contained in the copolymer becomes low, so that volatilization on heat treatment such as post baking can be prevented. When the molar ratio is 1:100 or higher, the ratio of the amino groups contained in the copolymer can be secured, so that the wettability enhancer can exerts its effect.

### Solvent

The ink-jet ink of the present invention includes at least one kind of solvent. Examples of the solvent may include a water-soluble organic solvent such as an alcohol and a water-insoluble organic solvent such as an ester or ether.
The proportion of the solvent to the ink-jet ink of the present invention is preferably from 30 % to 95% by mass, more preferably from 50 % to 90% by mass, and still more preferably from 60 % to 85% by mass. When the proportion of the solvent is 30% by mass or more, the amount of an ink provided to a certain region (for example, within one pixel) is secured, so that an adequate wet-spreading of the ink is attained in the region (a pixel, for example). When the proportion is 95% by mass or less, the amount of the components other than the solvent that are included in the ink and serve to form a functional film (pixel or the like, for example) can be kept above a predetermined amount. Thereby, when a color filter is formed, the amount of ink required for each pixel is not excessively large. For example, when an ink is deposited on a recessed part comparted with partition walls by using an ink-jet system, ink flooding out of the recessed part and color mixing with adjacent pixels can be prevented.

The water-insoluble organic solvent is more preferable from the viewpoint of keeping low the ink viscosity, because the monomer, binder, dispersant and the like can be dissolved therein even if they have no high polarity group.

In the ink-jet ink of the present invention, it is preferred that 70% by mass or more of the total amount of the solvent contained in the ink is, among the aforementioned solvents, an alkane diol derivative represented by the following Formula (2), considering the wettability to the substrate.

Formula (2): A-O-(CₘH₂ₘ-O)ₙ-B

The total number of the carbon atoms of the alkane diol derivative represented by the foregoing Formula (2) is 12 or less. In Formula (2), m represents an integer of from 2 to 7; n represents an integer of from 1 to 4; A and B each independently represent a hydrogen atom, an alkyl having 1 to 4 carbon atoms, or an acetyl group; A and B may be the same or different, but A and B are not simultaneously hydrogen atoms.

The effect of the wettability enhancer to the non-penetrative substrate can be more remarkably exerted by including the solvent represented by Formula (2) in an amount of 70% or more of the total amount of the solvent. The reason therefor is not clear, but it is supposed that the affinity between the aforementioned solvent and the wettability enhancer according to the present invention becomes high due to similarity in their structures, thereby making it easier to exert the effects.

Preferred examples of the alkane diol portion may include ethylene glycol, diethylene glycol, triethylene glycol, tetraethylene glycol, propylene glycol, dipropylene glycol, tripropylene glycol, butane diol, pentane diol, hexane diol, heptane diol, and octane diol.

Preferred examples of the alkaline diol derivative may include a monoether, a diether, a monoether acetate, and a diacetate.
Examples of the monoether as an example of the alkane diol derivative may include diethleneglycol monomethyl ether, diethyleneglycol monoethyl ether, diethyleneglycol monopropyl ether, diethyleneglycol monobutyl ether, triethyleneglycol monomethyl ether, triethyleneglycol monoethyl ether, triethyleneglycol monopropyl ether, trietyleneglycol monobutyl ether, tetraethyleneglycol monomethyl ether, tetraethyleneglycol monoethyl ether, tetraethyleneglycol monopropyl ether, tetraetyleneglycol monobutyl ether, propyleneglycol monomethyl ether, propyleneglycol monoethyl ether, propyleneglycol monopropyl ether, propyleneglycol monobutyl ether, dipropyleneglycol monomethyl ether, dipropyleneglycol monoethyl ether, dipropyleneglycol monobutyl ether, tripropyleneglycol monomethyl ether, tripropyleneglycol monoethyl ether, tripropyleneglycol monopropyl ether, tripropyleneglycol monobutyl ether, butanediol monomethyl ether, butanediol monoethyl ether, butanediol monopropyl ether, butanediol monobutyl ether, pentanediol monomethyl ether, petanediol monoethyl ether, pentanediol monopropyl ether, pentanediol monobutyl ether, hexanediol monomethyl ether, hexanediol monoethyl ether, hexanediol monopropyl ether, hexanediol monobutyl ether, heptanediol monomethyl ether, heptanediol monoethyl ether, heptanediol monopropyl ether, heptanediol monobutyl ether, octanediol monomethyl ether, octanediol monoethyl ether, octanediol monopropyl ether, and octanediol monobutyl ether.

Examples of the diether as an example of the alkane diol derivative may include diethleneglycol dimethyl ether, diethyleneglycol diethyl ether, diethyleneglycol dipropyl ether, diethyleneglycol dibutyl ether, triethyleneglycol dimethyl ether, triethyleneglycol dimethyl ether, triethyleneglycol diethyl ether, triethyleneglycol dipropyl ether, tetraethyleneglycol dimethyl ether, tetraethyleneglycol diethyl ether, propyleneglycol dimethyl ether, propyleneglycol diethyl ether, propyleneglycol dipropyl ether, propyleneglycol dibutyl ether, dipropyleneglycol dimethyl ether, dipropyleneglycol diethyl ether, dipropyleneglycol dipropyl ether, tripropyleneglycol dimethyl ether, butanediol dimethyl ether, butanediol diethyl ether, butanediol dipropyl ether, butanediol dibutyl ether, pentanediol dimethyl ether, petanediol diethyl ether, pentanediol dipropyl ether, pentanediol dibutyl ether, hexanediol dimethyl ether, hexanediol diethyl ether, hexanediol dipropyl ether, heptanediol dimethyl ether, heptanediol diethyl ether, octanediol dimethyl ether, and octanediol diethyl ether.

Examples of the monoether acetate as an example of the alkane diol derivative may include diethyleneglycol monomethylether acetate, diethyleneglycol monoethylether acetate, diethyleneglycol monopropylether acetate, diethyleneglycol monobutylether acetate, triethyleneglycol monomethylether acetate, triethyleneglycol monopropylether acetate, triethyleneglycol monobutylether acetate, tetraethyleneglycol monomethylether acetate, tetraethyleneglycol monoethylether acetate, propyleneglycol monomethylether acetate, propyleneglycol monoethylether acetate, propyleneglycol monobutylether acetate, dipropyleneglycol monomethylether acetate, dipropyleneglycol monoethylether acetate, dipropyleneglycol monopropylether acetate, dipropyleneglycol monobutylether acetate, tripropyleneglycol monomethyletherether acetate, butanediol monomethylether acetate, butanediol monoethylether acetate, butanediol monopropylether acetate, butanediol monobutylether acetate, pentanediol monomethylether acetate, pentanediol monoethylether acetate, pentanediol monopropylether acetate, pentanediol monobutylether acetate, hexanediol monomethylether acetate, hexanediol monoethylether acetate, hexanediol monopropylether acetate, hexanediol monobutylether acetate, heptanediol monomethylether acetate, heptanediol monoethylether acetate, heptanediol monopropylether acetate, octanediol monomethylether acetate, and octanediol monoethylether acetate.

Examples of the diacetate as an example of the alkane diol derivative may include diethyleneglycol diacetate, triethyleneglycol diacetate, propanediol diacetate, dipropyleneglycol diacetate, butanediol diacetate, pentanediol diacetate, and hexanediol diacetate.

Further, the ink-jet ink of the present invention contains preferably a solvent with a high boiling point among the aforementioned solvents, from the viewpoint of the ejecting property of the ink from a nozzle and the wettability to the substrate. A solvent with a low boiling point readily vaporizes even on an ink-jet head, causing readily increase in the ink viscosity, deposition of a solid, or the like on the head, thereby being often accompanied by degradation of the ejecting property. In addition, when ink wets and spreads on the substrate after reaching the substrate, the solvent vaporizes to increase the ink viscosity at the edge of the wet-spreading region. Thereby, wet-spreading is inhibited by a phenomenon known as "PINNING" in some cases.
Specifically, from the viewpoint of attaining an adequate wet-spreading effect, the solvent contained may include a compound having a boiling point of 220°C or higher under normal temperature and pressure (25°C, 760 mmHg) in an amount of preferably 70% by mass or more of the total amount of the solvent, more preferably 80% or more, and still more preferably 90% or more. Examples of the compound (solvent) having a boiling point of 220°C or higher under normal temperature and pressure may include a high boiling point solvent as described in paragraph numbers [0031] to [0037] of JP-A No. 2000-310706, alkyleneglycol monoether, alkyleneglycol monoether acetate, alkyleneglycol monoacetate, and alkyleneglycol diacetate.
Among the aforementioned alkane diol derivatives, a solvent having a boiling point of 220°C or higher under normal temperature and pressure can be used suitably.
Among these, from the viewpoint of providing an adequate wet-spreading property after reaching a non-penetrative substrate, particularly preferable are triethyleneglycol dimethyl ether, triethyleneglycol diethyl ether, tetraethyleneglycol dimethyl ether, dipropyleneglycol monomethylether, dipropyleneglycol dimethyl ether, propyleneglycol diacetate, dipropyleneglycol monomethylether acetate, propyleneglycol-n-butylether acetate, dipropyleneglycol mono-n-butyl ether, tripropyleneglycol methylether acetate, diethyleneglycol monobutyl ether, 1,3-butanediol diacetate, dipropyleneglycol-n-propylether acetate, propylene carbonate, diethylenglycol monobutylether acetate, dipropyleneglycol-n-butylether acetate, and the like.

The upper limit of the solvent boiling point is not particularly limited as long as a functional film (color filter, for example) can be prepared using the ink-jet ink of the present invention with an ink-jet system; from the viewpoint of handling in an ink preparation process and a color filter production process, the solvent is desirably an organic solvent which is a relatively low viscosity liquid at normal temperature (25°C) and which has a boiling point of 290°C or lower, preferably 280°C or lower.

### Colorant

The ink-jet ink of the present invention includes at least one kind of colorant.
The colorant used in the present invention may include known materials such as organic pigments, inorganic pigments, and dyes. However, various pigments are suitable, because sufficient transmission density, light resistance, adhesion to the substrate, and the other resistances are requested.

Preferable specific examples of the colorant may include compounds classified into "Pigment" in the Color Index (C. I., published by The Society of Dyers and Colorists Corp.), pigments and dyes described in paragraph numbers [0038] to [0054] of JP-A No. 2005-17716, a pigment described in paragraph numbers [0068] to [0072] of JP-A No. 2004-361447, and a colorant described in paragraph numbers [0080] to [0088] of JP-A 2005-17521. By incorporating a pigment as the colorant, the storage stability of a colored functional film (color pixel, for example) is improved.

The amount of the colorant contained in the ink-jet ink is not particularly limited; however, from the viewpoint of attaining desired hue and density, the amount is preferably 10% by mass or more, more preferably from 12% to 70% by mass, still more preferably from 15% to 60% by mass, and particularly preferably from 20% to 50% by mass.

The pigment may include preferably a red, a green, or a blue color pigment. Thereby, red pixels, green pixels, and blue pixels that are the components of a color filter can be appropriately formed using the ink-jet ink of the present invention.
The pigment is preferably at least one kind selected from C. I. Pigment Red 254, C. I. Pigment Red 177, C. I. Pigment Yellow 150, C. I. Pigment Green 36, C. I. Pigment Green 7, C. I. Pigment Blue 15:6, and C. I. Pigment Violet 23. By incorporating there pigments, the dispersing state thereof in the ink-jet ink is stabilized, and the color purity is also improved.

The pigment in the ink-jet ink that is used to form red pixels contains preferably at least one kind of red pigment. The ink-jet ink does not necessarily contain only one red pigment, and use of a combination of two or more red pigments in the form of a mixed pigment or use of a combination of a red pigment and one or more pigments in other colors in the form of a mixed pigment is also preferable. Examples of such combinations may include, in the case of C. I. Pigment Red 254, a combination with C. I. Pigment Red 177, C. I. Pigment Red 224, C. I. Pigment Yellow 139, C. I. Pigment Yellow 150, or C. I. Pigment Violet 23.

The pigment in the ink-jet ink that is used to form green pixels preferably contains at least one kind of green pigment. The ink-jet ink does not necessarily contain only one green pigment, and use of a combination of two or more green pigments in the form of a mixed pigment or use of a combination of a green pigment and one or more pigments in other colors in the form of a mixed pigment is also preferable. Examples of such combinations may include, in the case of C. I. Pigment Green 36, a combination with C. I. Pigment Yellow 150, C. I. Pigment Yellow 139, C. I. Pigment Yellow 185, C. I. Pigment Yellow 138, or C. I. Pigment Yellow 180. C. I. Pigment Green 7 can be used in place of or in combination with C. I. Pigment Green 36.

The pigment in the ink-jet ink that is used to form blue pixels preferably contains at least one kind of blue pigment. The ink-jet ink does not necessarily contain only one blue pigment, and use of a combination of two or more blue pigments in the form of a mixed pigment or use of a combination of a blue pigment and one or more pigments in other colors in the form of a mixed pigment is also preferable. Examples of such combinations may include, in the case of C. I. Pigment Blue 15:6, a combination with C. I. Pigment Violet 23 or C. I. Pigment Blue 60.

In the case of using two or more kinds of pigments in combination as mentioned above, the content of C. I. Pigment Red 254, C. I. Pigment Green 36 and/or C. I. Pigment Green 7, or C. I. Pigment Blue 15:6 in the pigment may be as follows: the content of C. I. Pigment Red 254 is preferably 30% by mass or more considering color purity and the like and is particularly preferably 40% by mass or more; the content of C.I. Pigment Green 36 is preferably 40% by mass or more considering color purity and the like and is particularly preferably 50% by mass or more; and the content of C.I. Pigment Blue 15:6 is preferably 70% by mass or more considering color purity and the like and particularly preferably 80% by mass or more.

The pigment used in the present invention has a number average particle size of preferably from 1 nm to 200 nm, more preferably from 10 nm to 100 nm, and particularly preferably from 10 nm to 50 nm. When the number average particle size of the pigment is 10 nm or more, the surface energy of the particles is small and the pigment does not readily aggregate, so that it is easier to disperse the pigment and maintain stably the dispersed state, which is preferable. When the number average particle size of the pigment is 200 nm or less, depolarization by the pigment does not easily occur, so that the contrast is improved, which is preferable.
Herein, "particle size" refers to a diameter of a circle having the same area as that of an electron micrograph picture image of the particle. Further, "number average particle size" refers to an average value of the particle sizes of 100 particles obtained as described above.

The pigment is used desirably in the form of a dispersion liquid. The dispersion liquid can be prepared by dispersing with a known dispersing machine a composition that is obtained by preliminary mixing the pigment, the solvent, and preferably a pigment dispersant described later. A small amount of resin may be also added to impart dispersing stability to the pigment. Further, it is also possible to prepare the dispersion liquid by adding a composition obtained by preliminary mixing the pigment and pigment dispersant to a monomer described later, and dispersing them. The dispersing machine used to disperse the pigment is not particularly limited, but may include known dispersing machines such as a kneader, a roll mill, an attritor, a super mill, a dissolver, a homo-mixer, and a sand mill that are described in "Ganryo No Jiten" by Asakura Kunizo, first edition, Asakura Publishing Co., Ltd., p. 438, 2000. Further, pulverization to fine particles may be conducted using a frictional force, by reference to the mechanical friction pulverization described in p. 310 of the above-mentioned document.

In the present invention, optionally, an inorganic pigment or a body pigment may be used. By using the inorganic pigment or body pigment, the thickness of a functional film (color pixel, for example) can be regulated adequately, the viscosity of the ink-jet ink can be also regulated adequately, and the hardness or shape, as well as durability, of the functional film (color pixel, for example) can be improved.
Specific examples of the inorganic pigment or body pigment may include titanium oxide, barium sulfate, calcium carbonate, zinc oxide, lead sulfate, chrome yellow, zinc chrome, colcothar (red iron oxide (III)), cadmium red, cobalt blue, iron blue, chromium oxide green, cobalt green, umber, titanium black, synthetic iron oxide black, and carbon black. The amount of the body pigment to be added may be selected as appropriate in accordance with its purposes, but is in the range of preferably from 1% to 70% by mass with respect to the total amount of the pigment, and more preferably from 5% to 50% by mass.

### Pigment Dispersant

To the ink-jet ink of the present invention, a pigment dispersant is desirably added in order to obtain dispersing stability of the pigment.
The amount of the pigment dispersant to be used is in the range of preferably from 0.1% to 10% by mass with respect to the total mass of the ink-jet ink, more preferably from 0.1 % to 9% by mass, and particularly preferably from 0.1 % to 8% by mass.
Examples of the pigment dispersant may include a hydroxyl group-containing carboxylic acid ester, a salt of a long-chain polyaminoamide and a high molecular weight acid ester, a salt of a high molecular weight polycarboxylic acid, a salt of a long-chain polyaminoamide and a polar acid ester, a high molecular weight unsaturated ester, a copolymerized polymer, a modified polyurethane, a modified polyacrylate, a polyetherester anionic surfactant, a salt of a naphthalene sulfonic acid formalin condensate, an aromatic sulfonic acid formalin condensate, a polyoxyethylene alkylphosphoric ester, polyoxyethylene nonylphenyl ether, stearylamine acetate, and a pigment derivative.

As a specific example of the pigment dispersant, the examples described in paragraph numbers [0021] to [0023] of JP-A No. 2005-15672 may be suitably used.

### Polymerizable monomer

The ink-jet ink of the present invention may include at least one kind of polymerizable monomer (hereinafter, also referred to as "curable component"). The polymerizable monomer is not particularly limited, but preferably may contain at least one selected from a (meth)acrylic monomer, an epoxy monomer, and an oxetanyl monomer, considering that these monomers are allowed to have a variety of substituents and are easily available.

The polymerizable monomer is preferably a monomer having two or more polymerizing groups (hereinafter, also referred to as "bi- or higher-functional monomer"). The polymerizable monomer is not particularly limited as long as it can be polymerized by an active energy ray and/or heat, but is more preferable a monomer having three or more functional groups (hereinafter, also referred to as "tri- or higher-functional monomer") considering the strength and solvent resistance of a resulting film, and the like.

The foregoing polymerizable groups are not particularly limited, but as described above, an acryloyloxy group, a methacryloyloxy group, an epoxy group, or an oxetanyl group is particularly preferable.
Specific examples of the polymerizable monomer may include: epoxy group-containing monomers described in paragraph numbers [0061] to [0065] of JP-A No. 2001-350012; acrylate monomers and methacrylate monomers described in paragraph number [0016] of JP-A No. 2002-371216; oxetanyl group-containing monomers described in JP-A Nos. 2001-220526, 2001-310937, 2003-341217 (Paragraph Nos. [0021] to [0084]), and 2004-91556 (Paragraph Nos. [0022] to [0058]); and monomers described in "Hannousei Monomer No Shijo Tenbou" published by CMC Publishing Co., Ltd.

Examples of the epoxy group-containing monomer as an epoxy monomer may include a bishenol A epoxy resin, a bisphenol F epoxy resin, a brominated bisphenol A epoxy resin, a bisphenol S epoxy resin, a diphenylether epoxy resin, a hydroquinone epoxy resin, a naphthalene epoxy resin, a biphenyl epoxy resin, a fluorene epoxy resin, a phenolnovolak epoxy resin, an orthocresolnovolak epoxy resin, a trishydroxyphenylmethane epoxy resin, a tri-functional epoxy resin, a tetraphenylolethane epoxy resin, a dicylopentadiene phenol epoxy resin, a hydrogenated bisphenol A epoxy resin, a bisphenol A nucleus-containing polyol epoxy resin, a polypropyleneglycol epoxy resin, a glycidylester epoxy resin, a glycidylamine epoxy resin, a glyoxal epoxy resin, an alicyclic epoxy resin, and a heterocyclic epoxy resin.

More specifically, examples may include: a bisphenol A epoxy resin such as "EPICOAT 828" (trade name, Yuka-Shell Epoxy Co., Ltd.); a bisphenol F epoxy resin such as "YDF-175S" (trade name, Tohto Kasei Co., Ltd.); a brominated bisphenol A epoxy resin such as "YDB-715" (trade name, Tohto Kasei Co., Ltd.); a bisphenol S epoxy resin such as "EPICLON EXA1514" (trade name, Dainippon Ink and Chemicals Inc.); a hydroquinone epoxy resin such as "YDC-1312" (trade name, Tohto Kasei Co., Ltd.); a naphthalene epoxy resin such as "EPICLON EXA4032" (trade name, Dainippon Ink and Chemicals, Inc.); a biphenyl epoxy resin such as "EPICOAT YX4000H" (trade name, Yuka-Shell Epoxy Co., Ltd.); a bisphenol A novolak epoxy resin such as "EPICOAT 157S70" (trade name, Yuka-Shell Epoxy Co., Ltd.); a phenolnovolak epoxy resin such as "EPICOAT 154" (trade name, Yuka-Shell Epoxy Co., Ltd.) or "YDPN-638" (trade name, Tohto Kasei Co., Ltd.); a cresolnovolak epoxy resin such as "YDCN-701" (trade name, Tohto Kasei Co., Ltd.); a dicylopentadiene phenol epoxy resin such as "EPICLON HP-7200" (trade name, Dainippon Ink and Chemicals, Inc.); a trishydroxyphenylmethane epoxy resin such as "EPICOAT 1032H60" (trade name, Yuka-Shell Epoxy Co., Ltd.); a tri-functional epoxy resin such as "VG3101M80" (trade name, Mitsui Chemicals, Inc.); a tetraphenylolethane epoxy resin such as "EPICOAT 1031S" (trade name, Yuka-Shell Epoxy Co., Ltd.); a tetra-functional epoxy resin such as "DENACOL EX-411" (trade name, Nagase Chemicals Ltd.); a hydrogenated bisphenol A epoxy resin such as "ST-3000" (trade name, Tohto Kasei Co., Ltd.); a glycidylester epoxy resin such as "EPICOAT 190P" (trade name, Yuka-Shell Epoxy Co., Ltd.); a glycidylamine epoxy resin such as "YH-434" (trade name, Tohto Kasei Co., Ltd.); a glyoxal epoxy resin such as "YDG-414" (trade name, Tohto Kasei Co., Ltd.); an alicyclic polyfunctional epoxy resin compound such as "EPOLEAD GT-401" (trade name, Daicel Chemical Industries, Ltd.); and a heterocyclic epoxy resin such as triglycidyl isocyanate (TGIC). If necessary, an epoxy reactive diluent such as "NEOTOHTO-E" (trade name, Tohto Kasei Co., Ltd.) may be added and mixed.

Among the acrylate monomers and methacrylate monomers as (meth)acrylic monomers, examples of tri-functional monomers may include trimethylolpropane triacrylate, trimethylolpropane PO (propylene oxide)-modified triacrylate, trimethylolpropane EO (ethylene oxide)-modified triacryalte, trimethylolpropane trimethacrylate, pentaerythritol triacrylate, and the like. Examples of tetra or more-functional monomers may include pentaerythritol tetraacrylate, pentaerythritol tetramethacrylate, dipentaerythritol pentaacrylate, dipentaerythritol pentamethacrylate, dipentaerythritol hexaacrylate, and dipentaerythritol hexamethacrylate.

The oxetanyl group-containing monomer as an oxetanyl monomer may preferably be any of the compounds described in paragraph numbers [0021] to [0084] ofJP-A No. 2003-341217. In addition, any of the compounds described in paragraph numbers [0022] to [0058] of JP-A No. 2004-91556 may be used.
Specific examples ([O-1] to [O-25]) of the oxetanyl group-containing monomer are shown below. These examples should not be construed as limiting the present invention.

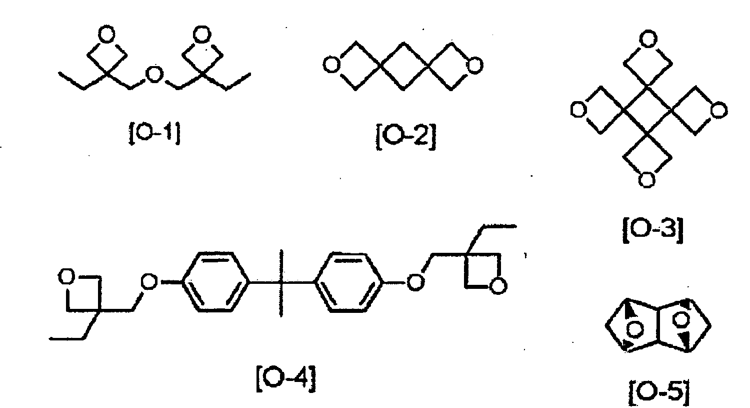

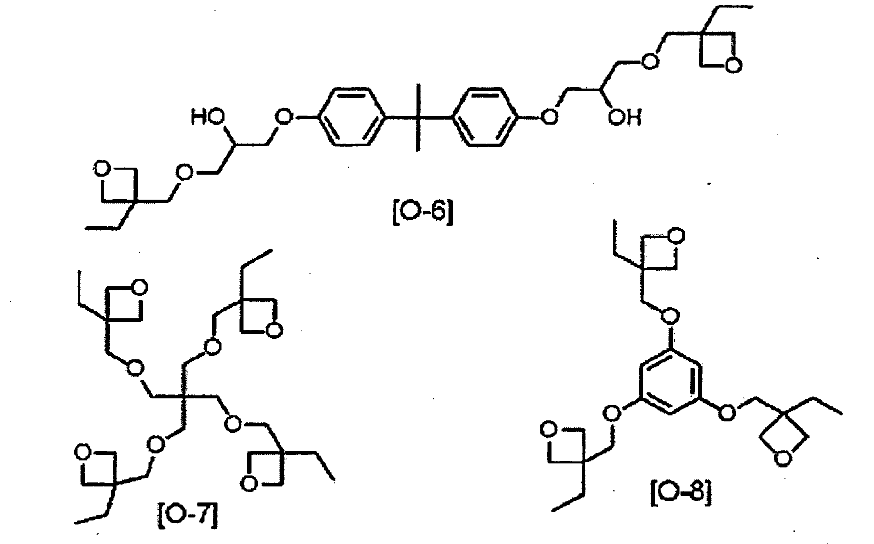

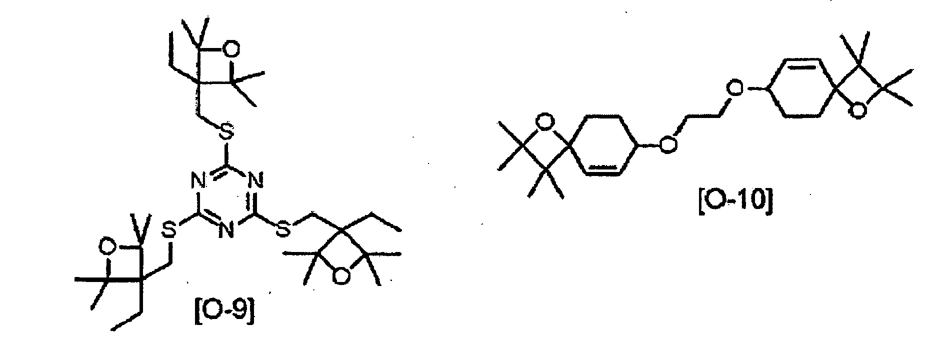

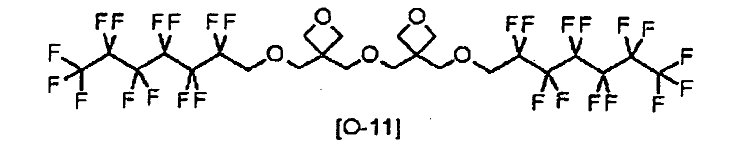

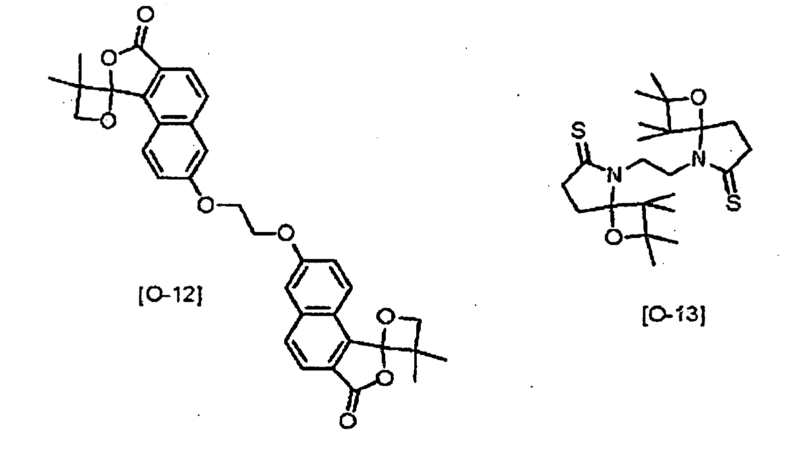

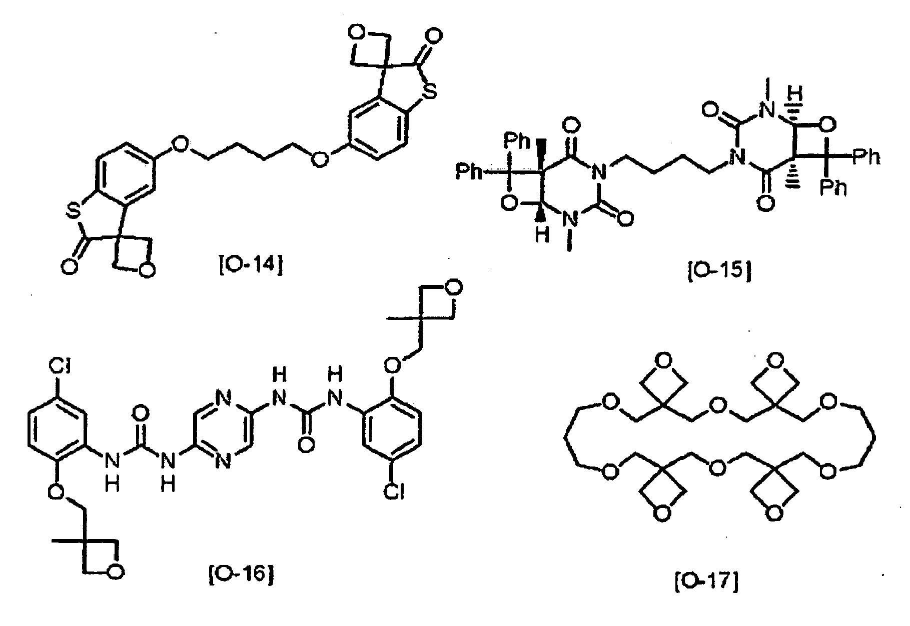

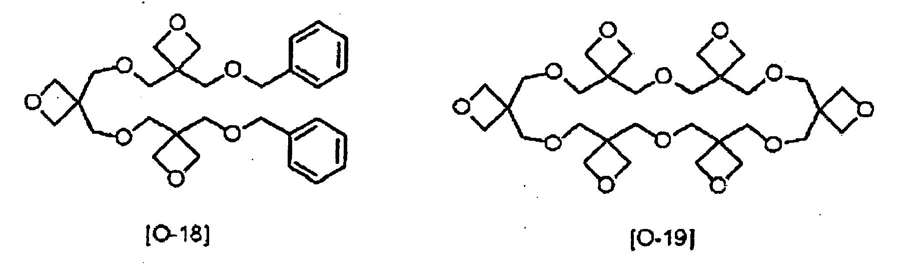

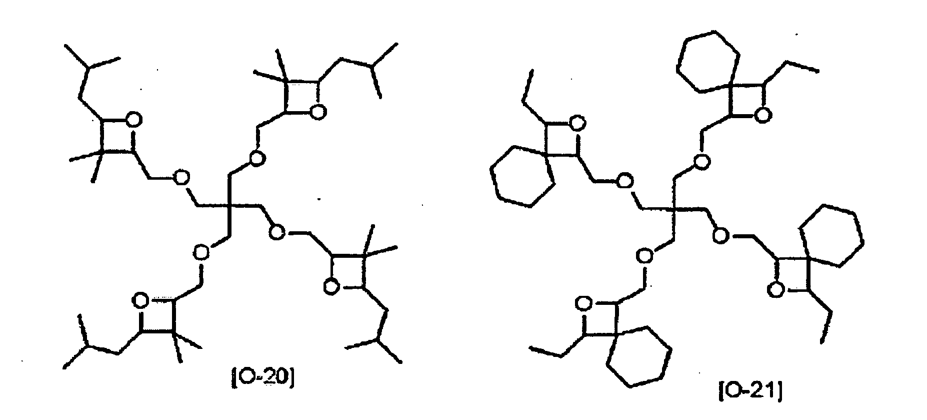

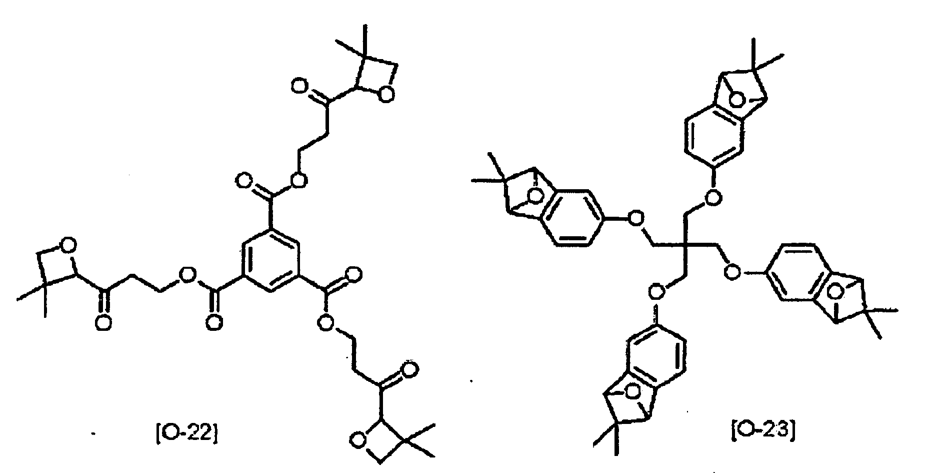

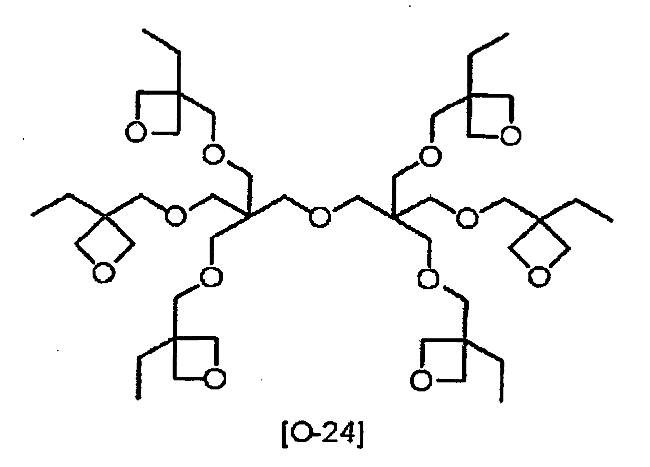

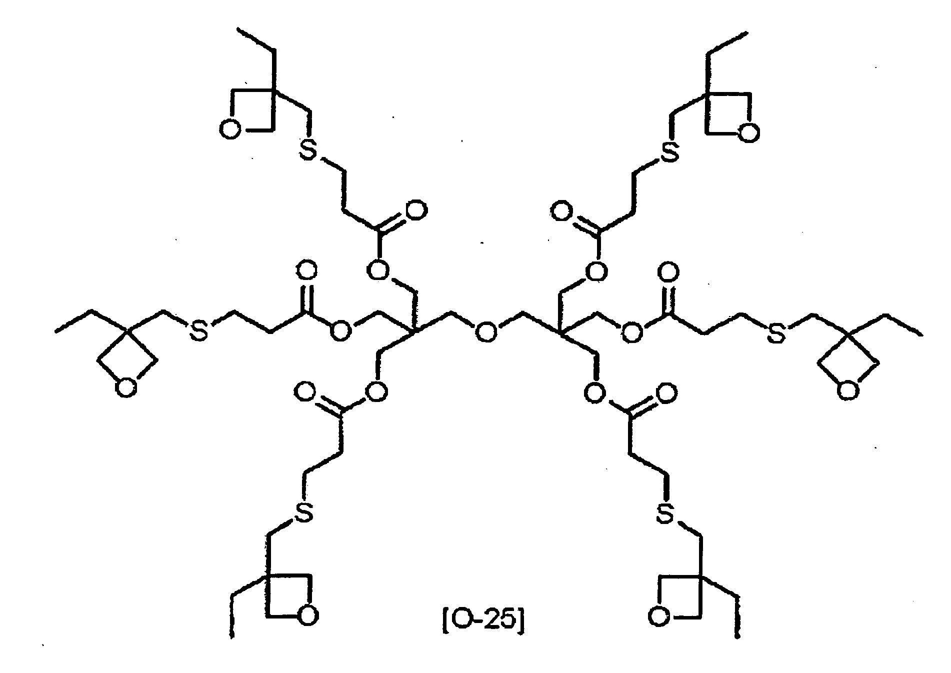

These compounds having an oxetanyl group (oxethanyl group-containing monomers) may be added in a ratio of preferably from 0.1% to 70% by mass with respect to the solid content of the ink-jet ink, more preferably from 0.5% to 60% by mass, and still more preferably from 1% to 50% by mass. Only a single oxetanyl group-containing monomer (oxetane compound), or alternatively, two or more kinds of oxetanyl group-containing monomers, may be used.

In order to lower the viscosity of the ink-jet ink and to promote the polymerization of the ink after being ejected (pixel portions, for example), a mono-functional monomer or a bi-functional monomer may be used additionally as appropriate. By additionally using the mono-functional monomer or bi-functional monomer, the ink viscosity is lowered, thereby an effect of preventing nozzle clogging can be attained. Examples of the mono-functional monomer or bi-functional monomer may include a mono-functional epoxy group-containing monomer described in paragraph number [0065] of JP-A No. 2001-350012, a mono-functional or a bi-functional acrylate monomer or methacrylate monomer described in paragraph numbers [0015] to [0016] of JP-A No. 2002-371216, and a mono or bi-functional monomer described in "Hannousei Monomer No Shijyo Tenbou" published by CMC Publishing Co., Ltd.

In order to reinforce the strength of a resulting film or to impart adhesion to the substrate, a high viscosity polyfunctional monomer or a monomer or oligomer having high polarity such as urethane acrylate may be used. Preferable polyfunctional monomers or preferable monomers or oligomers with high polarity are not particularly limited, and conventional ones may be used. Examples thereof may include dipentaerythritol hexaacrylate, EO-modified isocyanuric acid diacrylate, EO-modified isocyanuric acid triacrylate, ε-caprolactone-modified tris(acryloxyethyl) isocyanurate, urethane acrylate (for example, "ARONICS" (trade name) M-1000, M-1200, M1210, and M-1600 manufactured by TOAGOSEI Co., Ltd.), and polyester acrylate (for example, "ARONICS"(trade name) M-6100, M6200, M-6250, M-6500, M7100, M-7300K, M-8030, M-8060, M-8100, M-8530, M-8560, and M-9050 manufactured by TOAGOSEI Co., Ltd.).

The content of the polymerizable monomer is preferably 20% by mass or more in the solid content of the ink-jet ink, more preferably 30% by mass or more, and still more preferably 40% by mass or more. When the amount of the monomer to be used is 20% by mass or more, the resulting functional film (color pixel, for example) is sufficiently polymerized, so that the following effects, for example, are obtained: scars caused by lack of membrane strength of the resulting functional film (color pixels, for example) do not easily occur; cracks or reticulations do not easily occur upon applying a transparent electroconductive film; solvent resistance is improved at the time of formation of an orientation film; and the voltage retention ratio is not lowered. Here, the solid content of the ink-jet ink that is used to determine the mixing ratio includes all of the components except the solvent, and thus liquid polymerizable monomer(s) and the like, if any, are also included in the solid content.

### Binder Resin

It is preferable to use a binder resin in the ink-jet ink of the present invention, for the purpose of adjusting the viscosity, adjusting the hardness of a resulting functional film (color pixels, for example), and regulating the shape of the resulting functional film (color pixels, for example), for example.
A binder resin that simply dries and solidifies may be used as the binder resin of the ink-jet ink. For example, the binder resin may be composed of only a resin or resins having no polymerizability *per se.* Specific examples may include an epoxy resin, a diallylphthalate resin, a silicone resin, a phenol resin, an unsaturated polyester resin, a polyimide resin, a polyurethane resin, a melamine resin, a urea resin, an ionomer resin, an ethylene ethylacrylate resin, an acrylonitrile-acrylate-styrene copolymer resin, an acrylonitrile-styrene resin, an acrylonitrile-polyethylene chloride-styrene copolymer resin, an ethylene-vinylacetate resin, an ethylene-vinylalcohol copolymer resin, an acrylonitrile-butadiene-styrene copolymer resin, a vinylchloride resin, a chlorinated polyethylene resin, a polyvinylidene chloride resin, a cellulose acetate resin, a fluororesin, a polyoxymethylene resin, a polyamide resin, a polyarylate resin, a thermoplastic polyurethane elastomer, a polyetheresterketone resin, a polyether sulfone resin, polyethylene, polypropylene, polycarbonate resin, polystyrene, a polystyrene-maleic acid copolymer resin, a polystyrene-acrylic acid copolymer resin, a polyphenylene ether resin, a polyphenylene sulfide resin, a polybutadiene resin, a polybutylene terephthalate resin, an acrylic resin, a methacrylic resin, a methylpentene resin, polylactic acid, a polybutylene succinate resin, a butyral resin, a formal resin, polyvinyl alcohol, polyvinyl pyrrolidone, ethyl cellulose, carboxymethyl cellulose , gelatin, and copolymer resins thereof. These may be selected as appropriate considering membrane strength, viscosity, ink-jet ink remainder viscosity, pigment dispersion stability, heat stability, non-coloring property, resistance against water, and resistance against chemicals.

The amount of the binder resin to be added is not particularly limited, but is preferably from 0.1 part to 70 parts by mass with respect to 100 parts by mass of the solid content of the ink-jet ink. The binder resin may be used by being dissolved or dispersed in a solvent. When the binder resin is dispersed in a solvent, the average particle size of the binder resin dispersed is preferably 1.0 µm or less and more preferably 0.1 µm or less.
When the average particle size is 1.0 µm or less, head clogging and lowering in film transparency and smoothness can be prevented.
The binder resin increases the viscosity of the ink-jet ink in some cases, so that it is also preferable that the binder resin is not basically used.

In order to impart sufficient strength, durability, and adhesion after curing, it is preferable to use a binder resin that can cure the ink-jet ink through polymerization after the ink-jet ink is applied to the substrate by an ink-jet system. For example, a binder resin that can be cured by polymerization may be used, such as a photosetting binder resin that can be polymerized and cured by an action of visible light, UV light, electron beam or the like, and a thermosetting binder resin that can be polymerized and cured by heating.

### (1) Photosetting Binder Resin

The photosetting resin (photosetting binder resin) that can be polymerized and cured by an action of light such as UV-light or electron beam may be admixed with a polymer having a relatively large molecular weight so as to provide shape stability of the deposited ink droplets or adhesion to the substrate. Here, "relatively large molecular weight" refers to a molecular weight that is larger than so-called monomers or oligomers. As the polymer having a relatively large molecular weight, either one of a polymer having no polymerizability *per se* or a polymer having polymerizability *per se* may be used, and it is also possible to use two or more kinds of polymer having a relatively large molecular weight in combination.

As the polymer having no polymerizability, for example, a copolymer of two or more of the following monomers may be used.
Monomers: acrylic acid, methacrylic acid, methyl acrylate, methyl methacrylate, 2-hydroxyethyl acrylate, 2-hydroxyethyl methacrylate, benzyl acrylate, benzyl methacrylate, styrene, polystyrene macromonomer, and polymethyl methacrylate macromonomer.
More specific examples of the polymer having no polymerizability may include methacrylic acid-benzyl methacrylate copolymer, methacrylic acid-benzyl methacrylate-styrene copolymer, benzyl methacrylate-styrene copolymer, benzyl methacrylate macromonomer-styrene copolymer, and benzyl methacrylate-styrene macromonomer copolymer.

The polymer having polymerizability *per se* may be a polymer that starts polymerization by itself upon light irradiation or a polymer that starts polymerization by an action of another component such as a photo-polymerization initiator activated by light irradiation.
Various kinds of compounds having an ethylenic double bond have polymerizability *per se,* and may be used as a photosetting resin. A prepolymer that is conventionally admixed in an UV-light curable resin composition used in various fields such as ink, paint, or adhesive, may be used in the present invention as the polymer that has a relatively high molecular weight. Prepolymers so far known include radical polymerizable prepolymers, cation polymerizable prepolymers, and thiol-ene addition-type prepolymers, and any of them may be used.

Among these, the radical polymerizable prepolymers are most easily available in the market. Examples thereof may include ester acrylates, ether acrylates, urethane acrylates, epoxy acrylates, amino resin acrylates, acrylic resin acrylates, and unsaturated polyesters.

In the present invention, in order to prevent the viscosity of the ink-jet ink from becoming so high as to adversely affects the ejection performance of the ink-jet ink through an ejection head, the molecular weight of the compound having an ethylenic double bond that is used as the polymer having polymerizability *per se* is preferably 100,000 or less in terms of weight average molecular weight.
The polymer having a relatively large molecular weight may be admixed in a proportion of 1% to 50% by mass with respect to the total solid content of the ink-jet ink.

### (2) Thermosetting Binder Resin

As the thermosetting binder resin, a combination of a compound having two or more thermosetting functional groups within a molecule and a curing agent, is usually used. A catalyst capable of promoting the thermosetting reaction may be further admixed. The thermosetting functional group is preferably an epoxy group. These substances may be used with a polymer having no polymerizability *per se.*

As the compound having two or more thermosetting functional groups within a molecule, an epoxy compound having two or more epoxy groups within a molecule is usually used. The epoxy compound having two or more epoxy groups within a molecule is an epoxy compound (including a so-called epoxy resin) having two or more, preferably from 2 to 50, and more preferably from 2 to 20 epoxy groups within a molecule. An epoxy group having an oxirane ring structure may be used as the epoxy group. Examples thereof may include glycidyl, oxyethylene, and epoxycyclohexyl groups. The epoxy compound may be a known polyepoxy compounds that can be cured by a carboxylic acid. These epoxy compounds are widely disclosed, for example in "Epoxy Jushi Handbook" edited by Jinpo Masaki, published by The Nikkan Kogyo Shinbun, Ltd. (1987) and others, and they may be used in the present invention.

As the epoxy compound, it is preferable to use a combination of a polymer epoxy compound having a relatively large molecular weight, which may impart solvent resistance and/or heat resistance to the cured film, and a compound having a relatively small molecular weight, which may increase the crosslinking density of the cured film and/or improve the ejecting property of the ink-jet ink by lowering the viscosity thereof.

The epoxy compound that is a polymer having a relatively large molecular weight (hereinafter, also referred to as "binder epoxy compound") may be a polymer which is composed of at least one kind of structural unit represented by the following Formula (11) and at least one kind of structural unit represented by the following Formula (12) and which has two or more glycidyl groups.

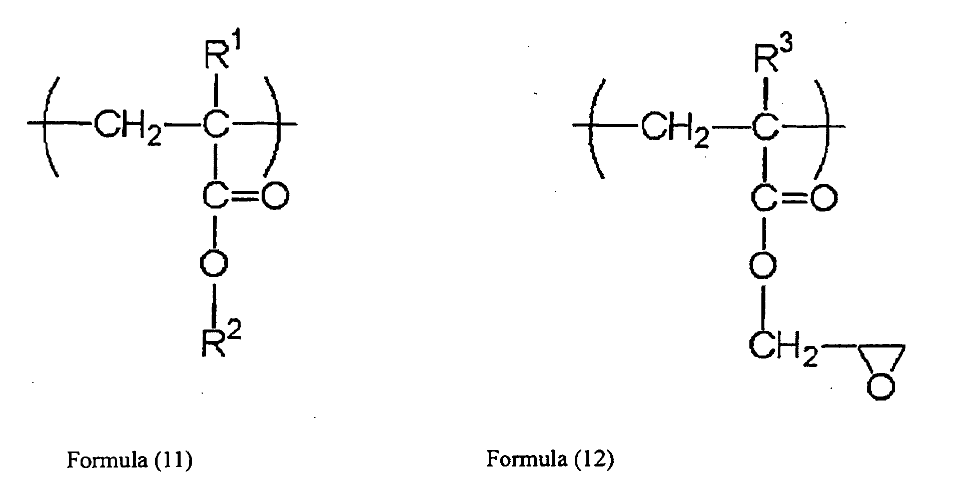

In the Formulas, R¹ represents a hydrogen atom or an alkyl group having 1 to 3 carbon atoms; R² represents a hydrocarbon group having 1 to 12 carbon atoms; and R³ represents a hydrogen atom or an alkyl group having 1 to 10 carbon atoms.

The structural unit represented by Formula (11) can be derived from a monomer represented by the following Formula (13).

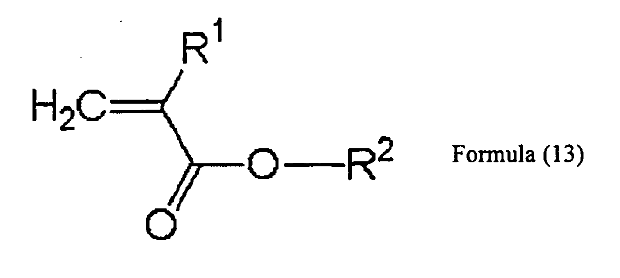

In Formula (13), R¹ and R² respectively have the same definitions as those of R¹ and R² in Formula (11).

By including at least one monomer represented by Formula (13) in the structural units of the binder epoxy compound, adequate hardness and transparency can be imparted to a functional film (color pixels, for example) formed from the ink-jet ink of the present invention. In Formula (13), R² represents a hydrocarbon group having 1 to 12 carbon atoms and may be any of a straight-chain aliphatic hydrocarbon group, an alicyclic hydrocarbon group, or an aromatic hydrocarbon group. Further R² may include an additional structure such as a double bond, a side chain that is a hydrocarbon group, a side chain forming a spiro-ring, or an endocyclic crosslinking hydrocarbon group.

Specific examples of the monomer represented by Formula (13) may include methyl (meth)acrylate, ethyl (meth)acrylate, i-propyl (meth)acrylate, n-propyl (meth)acrylate, i-butyl (meth)acrylate, n-butyl (meth)acrylate, t-butyl (meth)acrylate, 2-ethylhexyl (meth)acrylate, hexyl (meth)acrylate, octyl (meth)acrylate, lauryl (meth)acrylate, cyclohexyl (meth)acrylate, para-t-butylcyclohexyl (meth)acrylate, isobonyl (meth)acrylate, benzyl (meth)acrylate, dicyclopentenyl (meth)acrylate, and phenyl (meth)acrylate.

In Formula (13), R¹ represents preferably a hydrogen atom or a methyl group, and R² represents preferably an alkyl group having 1 to 12 carbon atoms and particularly preferably among them is a methyl group or a cyclohexyl group. Preferable monomers among the ones represented by Formula (13) include, specifically, methylmethacrylate (MMA) and cyclohexylmethacrylate (CHMA).

The structural unit represented by Formula (12) in the polymer is derived from a monomer represented by the following Formula (14). In Formula (14), R³ has the same definition as that of R³ in Formula (12).

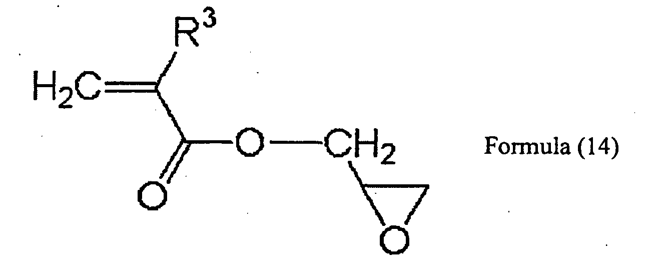

The monomer represented by Formula (14) may be used to incorporate an epoxy group (epoxy reaction point) into a polymer, for example.
In Formula (14), R³ represents preferably a hydrogen atom or a methyl group. Specific examples of the monomer represented by Formula (14) may include glycidyl (meth)acrylate, and glycidyl methacrylate (GMA) is particularly preferable.

The polymer having a relatively large molecular weight may be a random polymer or a block copolymer. This polymer may contain a main-chain constituent unit other than the unit represented by Formula (11) or Formula (12) as long as performances required for each fine region of a color filter, such as hardness and transparency, are secured. Specific examples of such a monomer may include acrylonitrile and styrene.

Regarding the contents of the structural unit represented by Formula (11) and of the structural unit represented by Formula (12) in the binder epoxy compound, the mass ratio of the charged amount of the monomer from which the structural unit represented by Formula (11) derives to the charged amount of the monomer from which the structural unit represented by Formula (12) derives (the monomer from which Formula (11) is derived : the monomer from which Formula (12) is derived is preferably in the range of from 10:90 to 90:10.
When the above mass ratio of the structural unit represented by Formula (11) is 90:10 or less, the ratio of the reaction points for curing can be increased, so that a higher crosslinking density can be attained. When the above ratio of the structural unit represented by Formula (12) is 10:90 or less, the ratio of a bulky skeleton can be increased, whereby shrink upon curing can be suppressed.

The weight average molecular weight of the binder epoxy compound is 3,000 or more and particularly preferably 4,000 or more in terms of polystyrene-equivalent weight average molecular weight. When the weight average molecular weight of the binder epoxy compound is 3,000 or more, adequate physical characteristics required for a functional film (color pixels, for example) as a fine region of a color filter, such as strength and solvent resistance, can be attained.
Further, the weight average molecular weight of the binder epoxy compound is preferably 20,000 or less in terms of polystyrene-equivalent weight average molecular weight, and more preferably 15,000 or less. When the molecular weight is 20,000 or less, viscosity increase can be suppressed, so that the ejection amount stability at the time of ejection from an ejection head and the straightness of the ejection direction are improved. The stability during long term storage can be also improved.

The above binder epoxy compound is particularly preferably a glycidyl methacrylate (GMA)/methyl methacrylate (MMA) copolymer that has a polystyrene-equivalent weight average molecular weight that is within the above range. The GMA/MMA copolymer may contain one or more other monomers as long as it attains objects of the present invention.

### Polymerization Initiator

In the ink-jet ink of the present invention, a polymerization initiator may be used so as to promote polymerization of the polymerizable monomer and of the binder resin. The polymerization initiator may be selected as appropriate in accordance with the kind of the polymerizable monomer and the binder used for the ink-jet ink and the polymerization pathway.

### (1) Polymerization Initiator Suitable for Acrylate (Methacrylate) Monomer and Photosetting Binder Resin

A polymerization initiator suitable for the acrylate monomer, the methacrylate monomer, and the photosetting binder resin may be a photo-polymerization initiator when polymerization is carried out by an active energy ray, and may be a heat-polymerization initiator when polymerization is carried out by heat. Examples of the photo-polymerization initiator may include the ones described in paragraph numbers [0079] to [0080] of JP-A No. 2006-28455. Preferable specific examples thereof include 2-trichloromethyl-5-(p-styrylstyryl)-1,3,4-oxadiazole and 2,4-bis(trichloromethyl)-6-[4'-(N,N-bisethoxycarbonyl methylamino)-3'-bromophenyl]-s-triazine.

As the heat-polymerization initiator, a generally known organic peroxide compound or azo compound may be used. Use of such a heat-polymerization initiator can improve the strength of a functional film (color pixels, for example). Besides the heat-polymerization initiator, a curing catalyst may be used such as imidazole. Only one organic peroxide or azo compound may be used, or two or more of such compounds may be used in combination. Here, the organic peroxide is a derivative of hydrogen peroxide (H-O-O-H), and is an organic compound having -O-O- bond within a molecule.

Examples of chemical structures of the initiator may include ketone peroxide, peroxy ketal, hydroperoxide, dialkyl peroxide, diacyl peroxide, peroxy ester, and peroxy dicarbonate.
Preferable specific examples may include 3,3',4,4'-tetrakis(t-butylperoxycarbonyl) benzophenone, benzoyl peroxide, 2,2-bis(4,4-di-t-butylperoxycyclohexyl)propane, 1,1-bis(t-hexylperoxy)-3,3,5-trimethyl cyclohexane, t-butylperoxy benzoate, di-t-butylperoxy benzoate, di-t-butylperoxy isophthalate, t-butylperoxy acetate, t-hexylperoxy benzoate, t-butylperoxy-3,5,5-trimethyl hexanoate, t-butylperoxy laurate, t-butylperoxy isopropyl monocarbonate, t-butylperoxy-2-ethylhexyl monocarbonate, 2,5-bis(m-toluylperoxy) hexane, 2,5-dimethyl-2,5-bis(benzoylperoxy) hexane, t-hexylperoxy isopropyl monocarbonate, t-butylperoxy isobutylate, 1,1,3,3-tetramethylbutylperoxy-2-ethyl hexanoate, t-hexylperoxy isopropyl monocarbonate, 2,5-dimethyl-2,5-bis(2-ethylhexanoylperoxy)hexane, t-butylperoxy-2-ethyl hexanoate, t-butylperoxy maleic acid, cyclohexanone peroxide, methylacetoacetate peroxide, methylhexanone peroxide, acetylacetone peroxide, 1,1-bis(t-hexylperoxy) cyclohexane, 1,1-bis(t-butylperoxy)-3,3,5-trimethyl cyclohexane, 1,1-bis(t-butylperoxy)-2-methylcyclohexanone, 1,1-bis(t-butylperoxy) cyclohexane, 2,2-bis(t-butylperoxy) butane, 2,2-bis(4,4-di-t-butylperoxy cyclohexyl) propane, diisopropylbenzene hydroperoxide, 1,1,3,3-tetramethylbutyl hydroperoxide, cumene hydroperoxide, and t-butylhydroperoxide. Further, preferable examples may include peroxy ketal compounds such as 2,2-bis(4,4-di-t-butylpeoxycyclohexyl) propane, diacyl peroxide compounds such as benzoyl peroxide, and peroxy ester compounds such as t-butylperoxy benzoate.

Examples of the azo compound may include the compounds described in paragraph numbers [0021] to [0023] of JP-A No. 5-5014. Among these compounds, preferable are a compound which has a moderately high decomposition temperature and which is stable at normal temperature but decomposes to generate a radical when heated and serves as a polymerization initiator. Among the organic peroxide compounds or the azo compounds as heat polymerization initiators, use of a compound that has a relatively high half-life temperature (preferably 50°C or higher, and more preferably 80°C or higher) provides a preferable composition that does not change its viscosity with time. Examples of preferable heat-polymerization initiators may include azobis(cyclohexane-1-carbonitrile).

The content of the photo-polymerization initiator and/or the heat-polymerization initiator suitable for the acrylate monomer, the methacrylate monomer, and the photosetting binder resin is preferably from 0.1% to 10% by mass with respect to the solid content (by mass) of the ink-jet ink, and more preferably from 0.3% to 5% by mass. When the polymerization initiator content is 0.1 % by mass or more with respect to the polymerizable monomers, the polymerization initiator can exert its effect sufficiently. When the content is 10% by mass or less, the viscosity of the ink-jet ink can be prevented from changing with time or coloring caused by the decomposition products of the polymerization initiator can be prevented.

Only a single polymerization initiator may be used, or alternatively, two or more polymerization initiators may be used in combination.

### (2) Polymerization Initiator Suitable for Oxetanyl Group-Containing Monomer or Binder Resin

As the polymerization initiator suitable for the oxetanyl group-containing monomer or the binder resin, a compound that generates acid is preferable. The compound that generates acid refers to a compound that can generate acid by an action of light or heat after the ink-jet ink is ejected. Any compound may be used if it generates a Bronsted acid or a Lewis acid by an action of light and/or heat in the ink-jet ink droplets after ejection.

Examples of the acid to be generated may include a carboxylic acid, a sulfonic acid, phosphoric acid, a phosphoric acid monoester, a phosphoric acid diester, sulfuric acid, a sulfuric acid monoester, sulfinic acid, hydrochloric acid, nitric acid, boric acid, trifluoroboric acid, a boron complex, an antimony derivative, and hexafluorophosphoric acid.

Among them, for effectively curing the oxetanyl group-containing monomer (oxetane compound) by an action of light and/or heat, hydrochloric acid, a sulfonic acid, or an acid that contains a boron atom or a phosphorous atom is preferable, and an acid that contains a phosphorous atom is most preferable.

Examples of specific compounds (photo-polymerization initiators) that generate such an acid may include an organohalogen compound, an oxydiazole compound, an organic borate compound, a disulfone compound, an oxime ester compound, and an onium salt compound. Among these, an onium salt acid generator such as iodonium salt or sulfonium salt is suitably used.

Specific examples of the oragnohalogen compound may include compounds described in the following documents: "Bulletin of Chemical Society of Japan" 42, 2924 (1969) by Wakabayashi et al; US Patent No. 3,905,815; Japanese Patent Publication (JP-B) No. 46-4605; JP-A No. 48-36281; JP-A No. 55-32070; JP-A No. 60-239736; JP-A No. 61-169835; JP-A No. 61-169837; JP-A No. 62-58241; JP-A No. 62-212401; JP-A No. 63-70243; JP-A No. 63-298339; "Journal of Heterocyclic Chemistry" 1 (No. 3), 1970 by M. P. Hutt; and others. In particular, an oxazole or s-triazine compound having a trihalomethyl group can be mentioned.

Specific examples of the organic borate compound may include organic borates described in, for example, JP-A No. 62-143044, JP-A No. 62-150242, JP-A No. 9-188685, JP-A No. 9-188686, JP-A No. 9-188710, JP-A No. 2000-131837, JP-A No. 2002-107916, Japanese Patent No. 2764769, and Japanese Patent Application No. 2000-310808, "Rad Tech' 98, Proceeding April, p. 19-22, 1998, Chicago" by Kunz, Martin; organic boron sulfonium complex and organic boron oxosulfonium complexes described in JP-A No. 6-157623, JP-A No. 6-175564, and JP-A No. 6-175561; organic boron iodonium complexes described in JP-A No. 6-175554 and JP-A No. 6-175553; organic boron phosphonium complexes descried in JP-A No. 9-188710; and organic boron transition metal coordination complexes described in JP-A No. 6-348011, JP-A No. 7-128785, JP-A No. 7-140589, JP-A No. 7-306527, JP-A No. 7-292014.

Examples of the disulfone compound may include compounds described, for example, in JP-A No. 61-166544 and JP-A No. 2002-328465 (Japanese Patent Application No. 2001-132318).

Examples of the oxime ester compound may include compounds described, for example, in J. C. S. Perkin II, 1653-1660 (1979); J. C. S. Perkin II, 156-162 (1979); Journal of Photopolymer Science and Technology, 202-232 (1995); JP-A No. 2000-66385; JP-A No. 2000-80068; and JP-A No. 2004-534797.

Examples of the onium salt compound may include a diazonium salts described in Photogr. Sci. Eng., 18, 387 (1974) by S. I. Schlesinger, and Polymer, 21, 423 (1980) by T. S. Bal et al; ammonium salts described in, for example, US Patent No. 4,069,055 and JP-A No. 4-365049; phosphonium salts described in US Patent No. 4,069,055 and US Patent No. 4069,056; iodonium salts described in EP Patent No. 104,143, US Patent No. 339,049, US Patent No. 410,201, JP-A No. 2-150848 and JP-A No. 2-296514.

An iodonium salt suitably used in the present invention is a diaryl iodonium salt, which is preferably substituted by two or more electron-donating substituents such as alkyl, alkoxy, and aryloxy groups, from the viewpoint of safety. More preferably, the diaryl iodonium salt is substituted by three or more alkoxy groups, and most preferably by four or more alkoxy groups. Further, another preferable diaryl iodonium salt that has excellent photosetting property is an iodonium salt in which at least one of the diaryl forms a part of a chromophore having an absorption at a wavelength of 300 nm or more, or an iodonium salt that has a functional group having an absorption at a wavelength of 300 nm or more as a substituent.

Examples of sulfonium salts suitably used in the present invention may include sulfonium salts described in EP Patent Nos. 370,693, 390,214, 233,567, 297,443 and 297,442, US Patent Nos. 4,933,377, 161,811, 410,201, 339,049, 4,760,013, 4,734,444 and 2,833,827, and DE Patent Nos. 2,904,626, 3,604,580 and 3,604,581. From the viewpoint of stability, the sulfonium salt may be preferably substituted by an electron-withdrawing group. The electron-withdrawing group preferably has a Hammett value of larger than 0. Examples of preferable electron-withdrawing groups may include a halogen atom and a carboxylic acid.
Other preferable sulfonium salts include a triarylsulfonium salt from the viewpoints of the balance of heat-decomposition property and stability and photosetting property when used in combination with a sensitizer or the like. The triarylsulfonium salt preferably has at least one electron-withdrawing group such as a halogen atom or a carboxyl group, more preferably substituted by two or more electron-withdrawing groups, and most preferably substituted by three or more electron-withdrawing groups.

Another preferable sulfonium salt is a sulfonium salt in which one of the substituent(s) of the triarylsulfonium salt has a coumarin or anthraquinone structure, wherein the sulfonium salt has an absorption at a wavelength of 300 nm or more. Still other preferable sulfonium salt is a sulfonium salt in which at least one of the triaryl forms a part of a chromophore having an absorption at a wavelength of 300 nm or more. A triarylsulfonium salt that has a functional group having an absorption at a wavelength of 300 nm or more as a substituent is also preferable.

Examples of the onium salt compound may include selenonium salts described in Macromolecules, 10(6), 1307 (1977) by J. V. Crivello et al. and J. Polymer Sci., Polymer Chem Ed., 17, 1047 (1979) by J. V. Crivello et al.; and arsonium salts described in Teh, Proc. Conf. Rad. Curing ASIA, p. 478 Tokyo, Oct. (1988) by C. S. Wen et al.

The content of the polymerization initiator suitable for the oxetanyl group-containing monomers and for the binder resin is preferably from 0.1% to 30% by mass with respect to the total solid content of the ink-jet ink, more preferably from 0.5% to 25% by mass, and particularly preferably from 1 % to 20% by mass. When the content is within the above range, a better sensitivity can be attained and a tough curing portion can be formed. Regarding the aforementioned acid generating agents, only a single acid generating compound may be used, or two or more acid generating agents may be used in combination.

### Curing Agent

The epoxy monomer (epoxy group-containing monomer) and the thermosetting binder resin may be generally admixed with a curing agent. The curing agent may be preferably selected from curing agents and enhancers described in chapter 3 of "Sousetsu Epoxy Jushi Kisohen I" published by Epoxy Jushi Gijutsu Kyokai, Nov. 19, 2003. For example, a polycarboxylic anhydride or a polycarboxylic acid may be used.

Specific examples of the polycarboxylic anhydride may include an aliphatic or alicyclic dicarboxylic anhydride such as phthalic anhydride, itaconic anhydride, succinic anhydride, citraconic anhydride, dodecenyl succinic anhydride, tricarbaryl anhydride, maleic anhydride, hexahydro phthalic anhydride, dimethyltetrahydro phthalic anhydride, himic anhydride, and nadic anhydride; aliphatic polycarboxylic dianhydrides such as 1,2,3,4-butane tetracarboxylic dianhydride and cyclopentane tetracarboxylic dianhydride; aromatic polycarboxylic anhydrides such as pyromellitic anhydride, trimellitic anhydride, and benzophenone tetracarboxylic anhydride; and ester group-containing anhydrides such as ethyleneglycol bistrimellitate and glycerin tristrimellitate. Aromatic polycarboxylic anhydrides are particularly preferable. Further, a commercially available epoxy resin curing agent that is composed of a carboxylic anhydride may be suitably used.

Specific examples of the polycarboxylic acid used in the present invention may include an aliphatic polycarboxylic acid such as succinic acid, glutaric acid, adipic acid, butane tetracarboxylic acid, maleic acid, or itaconic acid; an aliphatic polycarboxylic acid such as hexahydro phthalic acid, 1,2-cyclohexane dicarboxylic acid, 1,2,4-cyclohexane tricarboxylic acid, or cyclopentane tetracarboxylic acid; and an aromatic polycarboxylic acid such as phthalic acid, isophthalic acid, terephthalic acid, pyromellitic acid, trimellitic acid, 1,4,5,8-naphthalene tetracarboxylic acid, or benzophenone tetracarboxylic acid. An aromatic polycarboxylic acid is preferable.

The polycarboxylic acid used in the present invention is preferably a vinylether-blocked carboxylic acid. Specific examples may include vinylether-blocked carboxylic acids described in "Sousetsu Epoxy Jushi Kisohen I" published by Epoxy Jushi Gijutsu Kyokai, p. 193 to 194, JP-A No. 2003-66223, and JP-A No. 2004-339332. By blocking the carboxylic acid with vinylether, the addition reaction (esterification) between the carboxylic acid and the epoxy compound proceeds gradually at room temperature, so that increase in the viscosity of the ink-jet ink with time may be suppressed. In addition, solubility to various kinds of solvents, to the epoxy monomer, and to the epoxy resin is increased, so that a uniform composition can be prepared. The vinylether-blocked carboxylic acid is desirably used in combination with a heat-latent catalyst described later. By using with the heat-latent catalyst, de-blocking reaction is promoted upon heating, so that film shrinkage upon heating is minimized and so that a color filter having a still higher strength can be formed.

Only a single polycarboxylic anhydride or polycarboxylic acid may be used, or a mixture of two or more selected from polycarboxylic anhydrides and polycarboxylic acids may be used. The mixing amount of the curing agent used in the present invention is usually from 1 part to 100 parts by mass with respect to 100 parts by mass of the epoxy group-containing component (including monomer(s) as well as resin(s), if any), and preferably from 5 parts to 50 parts by mass. A mixing amount of the curing agent of 1 part by mass or more realizes excellent curing property, so that a tough functional film (color pixels, for example) can be formed. A mixing amount of the curing agent of 100 parts by mass or less realizes excellent adhesion of the resulting functional film (color pixels, for example) to the substrate, and realizes formation of a uniform and flat functional film (color pixels, for example).

### Heat-Latent Catalyst

In the present invention, when the epoxy group-containing monomers and the thermosetting binder resin are used, a catalyst that can promote the thermosetting reaction between acid and epoxy may be added so as to improve the hardness and heat resistance of the resulting functional film (color pixels, for example). The catalyst may be a heat-latent catalyst that becomes active upon thermosetting.

The heat-latent catalyst exhibits catalytic activity when heated, so as to promote curing reaction and impart excellent physical characteristics to the resulting cured product. The heat-latent catalyst is optionally added. A heat-latent catalyst exhibiting an acid-catalyst activity at a temperature of 60°C or higher is preferable, and examples thereof include a compound obtained by neutralizing a protonic acid with a Lewis base, a compound obtained by neutralizing a Lewis acid with a Lewis base, a mixture of a Lewis acid and a trialkyl phosphate, a sulfonic acid ester, and an onium compound. Various kinds of compound as described in JP-A No. 4-218561 may be used.

Specific examples may include:
(a) a compound obtained by neutralizing a halogenocarboxylic acid, a sulfonic acid, a phosphoric acid mono- or di-ester, or the like with any of various kinds of amines such as ammonia, monomethylamine, triethylamine, pyridine and ethanolamine, or with a trialkylphosphine;
(b) a compound obtained by neutralizing a Lewis acid such as BF₃, FeCl₃, SnCl₄, AlCl₃, or ZnCl₂ with the aforementioned Lewis base;
(c) an ester compound formed from methane sulfonic acid, ethane sulfonic acid, benzene sulfonic acid or the like and a primary alcohol or a secondary alcohol; and
(d) a phosphoric acid mono- or di-ester compound of a primary or secondary alcohol.

Examples of the onium compound may include an ammonium compound of [R¹NR²R³R⁴]⁺X⁻, a sulfonium compound of [R¹SR²R³]⁺X⁻, and an oxonium compound of [R¹OR²R³]⁺X⁻. Here, R¹ to R⁴ each independently represent an alkyl group, an alkenyl group, an aryl group, an alkoxy group, or the like. X⁻ represents a counter anion.

The heat-latent catalyst is desirably an acid catalyst free of halogen, considering, for example, contamination of liquid crystals. Examples of the acid-catalyst free of halogen may include "NOFCURE-LC-1" and "NOFCURE-LC-2 (both are trade name, NOF Corporation).

### Surfactant

The ink-jet ink of the present invention may further include a surfactant.
Preferable examples of the surfactant may include surfactants disclosed in paragraph number [0021] of JP-A No. 7-216276, JP-A No. 2003-337424, and JP-A No. 11-133600. The content of the surfactant is desirably 5% by mass or less with respect to the total amount of the ink-jet ink.

Examples of other additives may include those described in paragraph numbers [0058] to [0071] of JP-A 2000-310706.

### Method of Producing Ink-Jet Ink

A known method of producing an ink-jet ink can be used for the production of the ink-jet ink according to the present invention. Namely, components required for the ink-jet ink (for example, the polymerizable monomer, the binder, and the like) are dissolved in a solvent to prepare a monomer solution; and then the monomer solution is mixed with a pigment dispersion liquid containing a pigment dispersed therein, so that the ink-jet ink can be prepared. In the preparation, in order to avoid flocculation of the pigment caused by the solvent upon mixing, it is preferable to add the monomer solution little by little to the pigment dispersion liquid while stirring the pigment dispersion liquid.

During the preparation of the monomer solution, when the solubility of the material to be used to the solvent is low, treatments such as heating or ultrasonic treatment may be applied as appropriate as long as polymerization does not take place in the monomer solution.
Further, stirring speed or the addition speed of the pigment dispersion liquid to the monomer solution may be controlled as appropriate.

The wettability enhancer of the present invention (a compound having an amino group and an alkylene glycol portion within a molecule) may be added to the pigment dispersion liquid that is used for the preparation of the ink-jet ink or may be added to the monomer solution. In the present invention, the wettability enhancer is desirably added to the monomer solution because excellent wettability to the non-penetrative substrate is attained. That is, from the viewpoint of enhancing the wettability effectively by increasing the amount of the wettability enhancer free of adsorbed pigment, the wettability enhancer of the present invention may be added preferably after the pigment is dispersed. When the wettability enhancer of the present invention is contained in the pigment dispersion liquid, the effect of promoting the wettability relative to the added amount is lowered by pigment adsorption and the like, and sufficient effect is not obtained in some cases.

### Physical Characteristics of Ink-Jet Ink

The physical characteristics of the ink-jet ink according to the present invention are not particularly limited as long as they are within the range that allows ejection through an ink-jet head. The viscosity at 25°C is preferably from 2 mPa·s to 100 mPa·s from the viewpoint of attaining an excellent wettability to the non-penetrative substrate. When ejected by a machine, the temperature of the ink-jet ink is preferably kept constant in the range of from 20°C to 90°C, and the viscosity is preferably set within a range of 2 mPa·s to 40 mPa·s. When the temperature of the machine is high, the ink viscosity is lowered and ejection of an ink with high viscosity is possible; however, a higher temperature may easily cause thermal denaturation and/or heat polymerization reaction of the ink in the head, or evaporation of the solvent on the surface of an ink-ejecting nozzle, which easily leads to nozzle clogging. Therefore, the temperature of the machine is preferably 50°C or lower and the viscosity of the ink-jet ink is preferably from 5 mPa·s to 50 mPa·s at 25°C.

Here, the viscosity is measured with a commonly used E-type viscometer (for example, RE-80L E-type viscometer manufactured by TOKI SANGYO Co., Ltd.), while the ink-jet ink is kept at 25°C.

The surface tension of the ink-jet ink at 25 °C is preferably from 10 mN/m to 50 mN/m from the viewpoint of improving the wettability to the non-penetrative substrate, and more preferably from 15 mN/m to 40 mN/m. When ejected by a machine, it is preferable to maintain the temperature of the ink-jet ink substantially constant in the range of from 20°C to 90°C, and the surface tension is preferably set within a range of from 20 mN/m to 40 mN/m at that time. In order to keep the temperature of the ink-jet ink constant with a certain accuracy, an ink temperature detection device, an ink heating or cooling device, and a controlling device that regulates heating or cooling in accordance with the detected ink temperature may preferably be equipped. Alternatively, it is also preferable to provide a device that regulates the energy applied to the device ejecting the ink in accordance with the ink temperature and reduces the influence from the change in ink characteristics.

The surface tension is measured with a commonly used surface tension meter (for example, a surface tension meter FACE SURFACE TENSIOMETER CBVB-A3 manufactured by Kyowa Interface Science Co., Ltd.), using the Wilhermy method at a liquid temperature of 25°C and 60% RH.

In order to keep rightly the wet-spreading form after the ink-jet ink is deposited on a substrate, it is preferable to maintain a predetermined liquid properties of the ink-jet ink after it is deposited on the substrate. For this purpose, it is preferable to maintain the substrate and/or the vicinity of the substrate within a predetermined temperature range. Alternatively, it is also effective to reduce the influence from temperature change by, for example, increasing the heat capacity of a table supporting the substrate.

### Method of Producing Functional Film

The method of producing a functional film according to the present invention includes ejecting the ink-jet ink of the present invention described above onto a non-penetrative substrate by using an ink-jet system; and evaporating at least a part of the solvent to form a functional film. Because the ink-jet ink of the present invention described above is used, the ink adequately wet-spreads on the substrate when ejected onto the non-penetrative substrate to form a film, whereby a uniform functional film can be formed.
The scope of the functional film includes a color film such as color pixels that form a color filter, a protection film used for a color filter, an orientation film, a general resist film, and all of the films that are usually used after being coated and dried on a substrate.
Hereinafter, the details of the method of producing the functional film are explained with reference to the following method of producing a color filter.

### Color Filter and Method of Producing Same

The color filter of the present invention is prepared by using the ink-jet ink of the present invention described above. Due to the use of the in-jet ink for production, color irregularities and generation of uncolored portions are suppressed and the flatness of color pixels is excellent in the color filter of the present invention.

Specifically, the color filter of the present invention can be produced through a process that includes at least a step (hereinafter, referred to as an ink depositing step) of ejecting the ink-jet ink of the present invention described above onto recessed portions comparted with partition walls on a substrate by an ink-jet method, so as to deposit ink droplets on the recessed portions and so as to form a functional film (preferably a color region such as color pixels). Besides the ink depositing step, the process may further include at least a step of irradiating the deposited ink-jet ink with an active energy ray and/or heating the deposited ink-jet ink. In this case, at least one functional film (preferably a color region such as color pixels) is polymerized and cured by the active energy ray irradiation and/or heating. The step of irradiating the active energy ray (irradiation step) and/or the step of heating (heating step) is/are preferably conducted after the ink-jet ink is ejected and at least a part of the organic solvent contained in the ink-jet ink is removed, from the viewpoint of the flatness of the resulting pixel. Thereby, the functional film (preferably a color region such as color pixels) can be polymerized and cured after at least a part of the organic solvent is removed.

The partition wall on the substrate has been preliminary formed on the substrate prior to the ink depositing step. The details of the method of forming the partition wall will be described later.

In the ink depositing step, droplets of the ink-jet ink are ejected by an ink-jet system and deposited on recessed portions comparted with partition walls (deep color separation walls, for example) on a substrate so as to form a functional film (preferably a color region such as color pixels). The functional film can serve as color pixels of red (R), green (G), blue (B), and the like that form a color filter, for example.
The functional film may be formed by providing the ink-jet inks for forming color pixels (a RGB three-color pixel pattern, for example) to recessed portions comparted with partition walls that is formed on the substrate as described later, such that the resulting functional film includes plural pixels in two or more colors.
The ink-jet system will be described later.

The form of the color filter pattern is not particularly limited, and may be a stripe pattern that is common to black matrix patterns, a lattice pattern, or a delta-array pattern.

### Substrate

In the present invention, a non-penetrative substrate is used. Namely, upon ejecting onto the non-penetrative substrate by an ink-jet system, the ejected ink droplets wet-spread adequately. Here, the non-penetrative substrate refers to a substrate that does not allow substantial penetration of ink droplets, and "not allowing substantial penetration" means that the penetration rate of ink droplets one minute after ejection is 5% or less.

Examples of the substrate may include a substrate of soda glass used for liquid crystal display elements or the like, of borosilicate glass (PYREX (trade name) glass, for example), of quartz glass or of alkali-free glass; a substrate formed by attaching a transparent conductive electrode film to any of these glass substrates; a photoelectric conversion element substrate used for an imaging element or the like, such as a silicon substrate; a complementary metal oxide semiconductor (CMOS); and a synthetic resin film. As necessary, an underlying layer formed by silane coupling treatment or the like may be disposed on these substrates so as to improve adhesion to an upper layer, so as to prevent diffusion of materials, or so as to improve the flatness of the substrate surface.

### Partition Wall

In the present invention, an ink-jet ink is ejected, by an ink-jet system, onto recessed portions on a substrate comparted with partition walls that is formed on the substrate so as to deposit ink droplets and so as to from a functional film (color pixels, for example). Any partition wall may be used, but in the case of producing a color filter, a partition wall that can function as a black matrix (BM) and has a light-shielding property is preferable. The partition wall may be prepared from the same material and by the same method as a known black matrix for a color filter. Examples include black matrices described in paragraph numbers [0021] to [0074] of JP-A No. 2005-3861 or in paragraph numbers [0012] to [0021] of JP-A No. 2004-240039; and black matrices for ink-jet described in paragraph numbers [0015] to [0020] of JP-A No. 2006-17980 or in paragraph numbers [0009] to [0044] of JP-A No. 2006-10875.
In the known preparation methods described above, from the viewpoint of cost reduction, it is desirable to use a photosensitive resin transfer material. The photosensitive resin transfer material has at least a light-shielding resin layer disposed on a temporary support. The light shielding resin layer can be transferred to a predetermined permanent support by attaching the transfer material to the permanent substrate with pressure.

The photosensitive resin transfer material is preferably a photosensitive resin transfer material described in JP-A No. 5-72724, that is, a film having an integrated structure. An example of the integrated film is a structure including a temporary support, a thermoplastic resin layer, an intermediate layer, a photosensitive resin layer (a resin layer that can be cured by irradiation with light; may be "a light-shielding resin layer" when the layer should have light-shielding property), and a protection film provided in this order from the temporary support side.
Preferable examples of the temporary support, thermoplastic resin layer, intermediate layer, and protection layer for constituting the photosensitive resin transfer material, and a method for producing the transfer material may include those described in paragraph numbers [0023] to [0066] of JP-A No. 2005-3861.

At least a part of the partition walls has preferably been subjected to a ink-repellent treatment to acquire water-repellency, in order to prevent color mixing of the ink-jet inks. Examples of the ink-repellent treatment include (1) a process of incorporating an ink-repellent material into the partition walls (refer to JP-A No. 2005-36160, for example); (2) a process of disposing a new ink-repellent layer (refer to JP-A No. 5-241011, for example); (3) a process of imparting water-repellency by plasma treatment (refer to JP-A No. 2002-62420, for example); and (4) a process of coating an ink-repellent material on the top face of the partition walls (refer to JP-A No. 10-123500, for example). In particular, (3) the process of applying a water-repellency treatment by plasma to the partition walls formed on the substrate is preferable.

### Wettability Variable Layer

In the present invention, a step of changing selectively the wettability of a predetermined region on a surface of a non-penetrative substrate to form, on the substrate, an ink-layer forming region having a higher ink affinity than that of the region surrounding the ink-layer forming region, may be conducted. In this case, the following process may be conducted for example: a wettability variable layer that changes its wettability by an action of a photocatalyst such that the ink-affinity thereof increases is formed on a transparent substrate of a color filter; and then the wettability of a predetermined region on the surface of the wettability variable layer is changed selectively by exposure to light, so as to form an ink-layer forming region having a higher ink affinity than that of the region surrounding the ink-layer forming region
Details are described, for example, in paragraph numbers [0113] to [0121] of JP-A No. 2006-284752.

### Ink-Jet System

In the present invention, ink droplets are deposited by an ink-jet system on recessed portions comparted with partition walls on a substrate. The ink-jet system used in the present invention may be any of various processes such as a process of jetting continuously a charged ink-jet ink under control by an electric field; a process of jetting intermittently an ink-jet ink with a piezoelectric element; and a process of heating an ink-jet ink and jetting it intermittently by using foaming of the heated ink.

In an preferable embodiment of the color filter according to the present invention, ink-jet inks of at least three colors such as RGB are deposited by the ink-jet system on recessed portions comparted with a black matrix (partition walls) on a non-penetrative substrate, so as to provide a color filter composed of the black matrix and color pixels of at least three colors.

In the present invention, the time between the completion of deposition of ink in the ink depositing step and the start of heating in a heating step described later is preferably 30 seconds or longer. When the time is 30 seconds or longer, the resulting pixels have excellent flatness, and color irregularities are unlikely to occur when a display device is produced.

### Irradiation Step

The method of producing a color filter according to the present invention includes preferably, after completion of the ink depositing step, at least an irradiation step of irradiating liquid droplets of the deposited ink-jet ink with an active energy ray. Specifically, after at least a part of the solvent contained in the ink liquid droplets is removed, the remaining part of the ink may be irradiated with an active energy ray such as UV-light, an electron beam, or a laser.

### Heating Step

The method of producing a color filter according to the present invention preferably includes, after completion of the ink depositing step, at least a heating step of heating liquid droplets of the deposited ink-jet ink. Specifically, after at least a part of the solvent contained in the ink liquid droplets is removed to obtain a remaining part of the ink, the remaining part of the ink may be cured by heating to form a functional film (color pixels, for example). This heating step may be performed in a single or in multiple steps.

In the single step heating, after the solvent is removed, the remaining part of the ink is heated, from the beginning, at a predetermined temperature at which the remaining part of the ink fully cures. In the heating having multiple steps, heating is started at a relatively low temperature, and the temperature is successively elevated eventually to a predetermined temperature at which the ink-jet ink fully cures. Examples of the heating method include, but are not limited to, a process of heating with a hot plate, an electric oven, a drying oven or the like, and a process of heating by infrared ray irradiation.
Prior to this heating step, a step of curing the remaining part of the ink with an active energy ray may be performed.

The heating temperature and the heating time in the heating step depend on the composition of the ink-jet ink, the thickness of the functional film, and others. Heating at about 120°C to about 250°C for about 10 minutes to about 120 minutes is preferable from the viewpoints of ensuring a generally sufficient strength of the film (color pixels, for example), solvent resistance, alkali resistance, and the like.

In the method of producing a color filter according to the present invention, the time it takes from the ink depositing step to the heating step is preferably 24 hours or less, more preferably 12 hours or less, and still more preferably 6 hours or less. Aggregation of the pigment contained in the ink and precipitation of a binder or the like are suppressed and the surface state of the functional film (color pixels, for example) is improved by shortening the time it takes from the formation of the functional film to the final curing step (heating step).

After the color filter is prepared by forming the color region (color pixels, for example) and the partition walls (black matrix, for example), an overcoat layer that covers the entire face of the color region and partition wall may be formed, in order to improve resistances.
The overcoat layer can protect the color region such as R, G, and B and the partition wall and also provide a flat surface. However, from the viewpoint to avoid increase in the production steps, it is preferable not to provide the overcoat layer.
The overcoat layer can be formed by using a resin (an OC material). Examples of the resin (OC material) may include an acrylic resin composition, an epoxy resin composition, and a polyimide resin composition. Among these, the acrylic resin composition is desirable because it is excellent in transparency in the visible light region and also excellent in adhesion to the resin of the photosetting composition used for a color filter, which usually contains an acrylic resin as a main ingredient. Examples of the overcoat layer include those described in paragraph numbers [0018] to [0028] of JP-A No. 2003-287618 and "OPTOMER SS6699G" (trade name, manufactured by JSR Corp.) that is a commercially available overcoat material.

The color filter of the present invention is prepared in accordance with the aforementioned method of producing a color filter, and can be suitably used for applications including TVs, personal computers, liquid crystal projectors, game machines, mobile terminals such as cellular phones, digital cameras, and car navigation systems, without particular limitations. In the color filter of the present invention, at least one of color pixels such as red (R), green (G), blue (B), white (W), and violet (V) is formed by the method of producing a color filter in accordance with the present invention.

### Display Device

The display device of the present invention is not particularly limited as long as the device is equipped with the aforementioned color filter of the present invention. Examples of the display device include a liquid crystal display device, a plasma display device, an EL display device, and a CRT display device.

Definition of display devices and explanation of each display device are described in "Denshi Display Device" by Sasaki Akio, published by Kogyo Chousa Kai, Co., Ltd., 1990, and "Display Device" by Ibuki Sumiaki, published by Sangyo Tosho Co., Ltd., 1989, for example.

The display device of the present invention is particularly preferably a liquid crystal display device. The liquid crystal display device is described in "Jisedai Ekisho Display Gijutsu" edited by Uchida Tatsuo, published by Kogyo Chousa Kai Co., Ltd., 1994, for example. There is no particular limitation on the liquid crystal display devices to which the present invention can be applied. For example, the present invention can be applied to liquid crystal display devices of various different systems described in "Jisedai Ekisho Display Gijutsu" mentioned above. Among them, the present invention is particularly effective to a liquid crystal display device of a color TFT system. The liquid crystal display device of a color TFT system is described in "Color TFT Ekisho Display" published by Kyoritsu Shuppan Co., Ltd., 1996, for example. Further, the present invention can applied to liquid crystal display devices of an in-plane switching system such as IPS or of a divided-domain system such as MVA that realizes a widened view angle, as a matter of course. These systems are described in "EL, PDP, LCD Display - Gijutu To Shijho No Saishin Doukou -" published by Technical Surveys and Research Department of Toray Research Center, Inc., p. 43, 2001, for example.

The liquid crystal display device includes various members other than the color filter, such as an electrode substrate, a polarizing film, a phase difference film, a backlight, a spacer, and a viewing angle compensation film. These members are described in "'94 Ekisho Display Shuhen Zairyo·Chemicals No Shijyo" by Shima Kentaro, CMC Publishing Co., Ltd., 1994, and "Present Aspect & Future Outlook of LCD Related Market 2003" Vol. II by Omote Ryokichi, published by Fuji Chimera Research Institute, Inc., 2003, for example.

The display device of the present invention can adopt various display modes such as ECB (Electrically Controlled Birefringence), TN (Twisted Nematic), IPS (In-Plane Switching), FLC (Ferroelectric Liquid Crystal), OCB (Optically Compensatory Bend), STN (Super Twisted Nematic), VA (Vertically Aligned), HAN (Hybrid Aligned Nematic), and GH (Guest Host).
The display device of the present invention has the aforementioned color filter. Due to the use of the color filter, display unevenness can be prevented and wide range of color reproduction and a high contrast ratio can be realized when the display device is installed in TVs or monitors. Therefore, the display device of the present invention can be used suitably also for displays of notebook computers, wide-screen display devices such as TV monitors, and the like.

### EXAMPLES

Hereinafter, the present invention will be further described in detail with reference to the following examples. However, the present invention is by no means limited to the following specific examples. In the following examples, "%" and "part(s)" denote "% by mass" and "part(s) by mass" respectively, and molecular weight denotes "weight average molecular weight", unless mentioned otherwise.

### Preparation of deep color composition for forming black matrix:

K pigment dispersion 1 and propyleneglycol monomethyl ether acetate in the amounts shown in the following Table 1 were weighed out, and mixed at 24°C (± 2°C) and stirred at 150 rpm for 10 minutes; while stirring, methylethyl ketone, cyclohexanone, binder-1, phenothiazine, DPHA liquid, 2,4-bis(trichloromethyl)-6-[4'-N,N-bis(ethoxycarbonylmethyl) amino-3'-bromophenyl]-s-triadine, and surfactant 1 in the amounts shown in Table 1 were weighed out, and added successively in this order at 25 °C (±2°C). The mixture was stirred for 30 minutes at 40°C (± 2°C) and 150 rpm, whereby a deep color composition K1 was obtained. The amounts shown in the following Table 1 is expressed in parts by mass, and the detailed composition is as follows.

K pigment dispersion 1:

| | |
|---|---|
| Carbon black (NIPEX35: trade name, manufacture by Degussa Corp.): | 13.1%, |
| Pigment dispersant (compound 1 shown below): | 0.65%, |
| Polymer (random copolymer of a benzyl methacrylate/methacrylic acid in a molar ratio of 72/28, having a molecular weight of 37,000): | 6.72%, |
| Propyleneglycol monomethylethyl acetate: | 79.53%. |

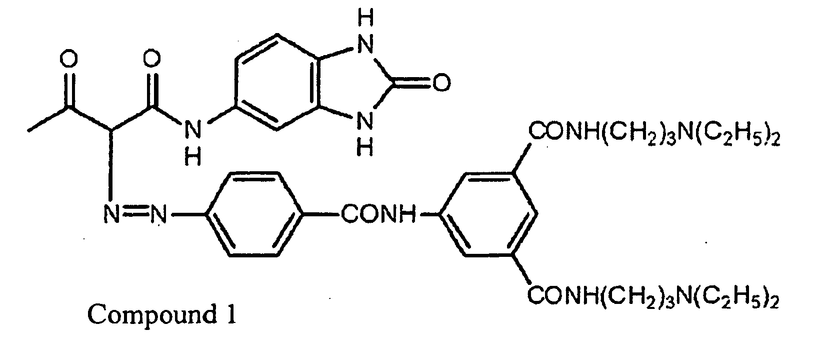

Binder 1:

| | |
|---|---|
| Polymer (random copolymer of a benzyl methacryalte/methacrylic acid in a molar ratio of 78/22, having a molecular weight of 38,000): | 27% |
| Propyleneglycol monomethylether acetate: | 73%. |

DPHA liquid:

| | |
|---|---|
| Dipentaerythritol hexaacrylate ("KAYARAD DPHA" (trade name), manufactured by Nippon Kayaku Co., Ltd., containing a polymerization inhibitor MEHQ in an amount of 500 ppm): | 76% |
| Propyleneglycol monomethylether acetate: | 24%. |

Surfactant 1:

| | |
|---|---|
| The following structure 1: | 30% |
| Methyl ethyl ketone: | 70%. |

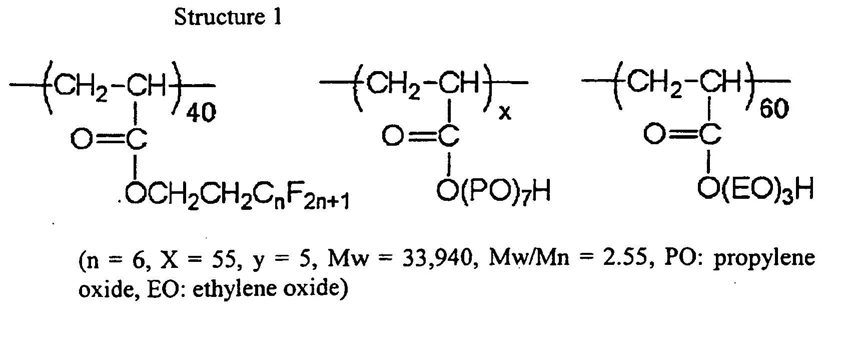

**Table 1**

| Deep color composition | K1 |
|---|---|
| K Pigment dispersion 1 (carbon black) | 30 |
| Propyleneglycol monomethylether acetate | 7.3 |
| Methyl ethyl ketone | 34 |
| Cyclohexanone | 8.6 |
| Binder 1 | 14 |
| DPHA liquid | 5.8 |
| 2,4-bis(trichloromethyl)-6-[4'-N,N-bis(ethoxycarbonylmethyl) amino-3'-bromophenyl]-s-triazine | 0.22 |
| Phenothiazine | 0.006 |
| Surfactant 1 | 0.058 |
| | (parts by mass) |

### Preparation of black matrix (partition wall):

### (Preparation of photosensitive transfer material)

On a 75 µm thick polyethylene terephthalate film as a temporary support, a coating liquid for forming a thermoplastic resin layer having the following formulation C was coated with a slit nozzle and dried to form a thermoplastic resin layer. Then, on the thermoplastic resin layer, a coating liquid for forming an oxygen blocking layer having the following formulation P1 was coated and dried to form an oxygen blocking layer. On the oxygen blocking layer, a deep color composition K1 shown in Table 1 described above was further coated and dried to from a photosensitive resin layer.
In this way, on the temporary support were disposed a thermoplastic resin layer having a dry thickness of 6.0 µm, an oxygen blocking layer having a dry thickness of 1.6 µm, and a photosensitive layer having a dry thickness of 2.5 µm; finally a protection film (a 12 µm thick polypropylene film) was pressure-bonded so as to form a photosensitive transfer material K1 in which the temporary support, the thermoplastic resin layer, the oxygen blocking layer, and the black (K) photosensitive layer were integrated.

Coating liquid for forming thermoplastic resin layer: Formulation C

| | |
|---|---|
| Methanol: | 11.1 parts, |
| Propyleneglycol monomethyl ether: | 6.36 parts, |
| Methyl ethyl ketone: | 52.4 parts, |
| Methyl methacrylate/2-ethylhexyl acryalte/benzyl methacrylate/methacrylic acid copolymer (copolymerization ratio (molar ratio) = 55/11.7/4.5/28.8, molecular weight = 100,000, and Tg ≈ 70°C): | 5.83 parts, |
| Styrene/acrylic acid copolymer (copolymerization ratio (molar ratio) = 63/37, molecular weight = 10,000, and Tg ≈ 100°C): | 13.6 parts, |
| A compound obtained by dehydration condensation between bisphenol A and 2 equivalents of pentaethylene glycol monomethacrylate (BPE-500 (trade name), manufactured by Shin-Nakamura Chemical Co., Ltd.): | 9.1 parts |
| Surfactant 1 shown above: | 0.54 part. |

Coating liquid for forming oxygen blocking layer: Formulation P1

| | |
|---|---|
| PVA205 (trade name, polyvinyl alcohol, manufactured by Kuraray Co., Ltd., saponification degree = 88%, polymerization degree = 550): | 32.2 parts, |
| Polyvinyl pyrrolidone (K-30: trade name, manufactured by BASF Corp.): | 14.9 parts, |
| Distilled water: | 524 parts |
| Methanol: | 429 parts. |

### Preparation of black matrix (partition wall):

An alkali-free glass substrate was washed with a rotating nylon bristle brush while a glass cleaning liquid conditioned at 25°C was sprayed to the glass substrate by a shower for 20 seconds, and the glass substrate was further washed with a pure water shower. After that, a silane coupling liquid (a 0.3% N-β (aminoethyl) γ-aminopropyl trimethoxysilane aqueous solution, "KBM603"(trade name), manufactured by Shin-Etsu Chemical Co., Ltd.) was sprayed to the glass substrate by a shower for 20 seconds, and then the glass substrate was washed with a pure water shower. The glass substrate after washing was heated at 100°C for 2 minutes with a substrate pre-heating apparatus.

After the protection film was peeled off, the photosensitive transfer material K1 was laminated on the glass substrate, which has been preliminary heated at 100°C for 2 minutes as described above, by using a laminator (LAMIC II, manufactured by Hitachi Industries Co., Ltd.) at a rubber roller temperature of 130°C, a linear pressure of 100 N/cm, and a feed speed of 2.2 m/minutes.
After the temporary support was peeled off, pattern exposure was conducted at an exposure of 90 mJ/cm² with a proximity exposing machine (manufactured by Hitachi Electronics Engineering Co., Ltd.) having a ultra-high pressure mercury lamp. During the pattern exposure, the glass substrate and a mask (quartz mask with an image pattern for exposure) stand upright, and the distance between the mask face and the photosensitive resin layer was set to 200 µm.
Then, after the surface of the photosensitive resin layer was uniformly wetted by spraying pure water with a shower nozzle, the resin layer was developed with a shower of a KOH developer (prepared by diluting "CDK-1" (trade name) 100-fold with pure water , CDK-1 is manufactured by Fuji Film Electronics Materials Co., Ltd. And contains KOH and a nonionic surfactant) at a flat nozzle pressure of 0.04 MPa at 23°C for 80 seconds, so that a patterned image was obtained. Subsequently, ultra-pure water was sprayed through an ultra-high pressure nozzle at a pressure of 9.8 MPa so as to remove residual matters and so as to obtain a black (K) image in a matrix pattern. After that, post-exposure was conducted on the glass substrate from the side at which the K image was formed, with light at an intensity of 1000 mJ/cm² emitted from an ultra-high pressure mercury lamp. Further, another post-exposure was conducted on the glass substrate from the side opposite to the side at which the K image was formed, with light at an intensity of 1000 mJ/cm² emitted from an ultra-high pressure mercury lamp. Then, heat treatment was conducted at 220°C for 30 minutes, and a black matrix (partition walls) was obtained.

### Ink repellent plasma treatment:

The black matrix formed on the glass substrate was subjected to ink repellent plasma treatment with a plasma treatment apparatus of cathode-coupling parallel-plate type under the following conditions.

### Conditions:

| | |
|---|---|
| Gas use for the treatment: | CF₄, |
| Gas flow rate: | 80 sccm, |
| Pressure: | 40 Pa, |
| RF power: | 50 W |
| Treatment time: | 30 seconds. |

### Ink-jet ink preparation 1:

### (Preparation of pigment dispersion liquid)

Diketo pyrrolopyrrole (C. I. Pigment Red 254, "IRGAPHOR RED B-CF" (trade name) manufactured by Ciba Specialty Chemicals Inc.) was mixed with "SOLSPERSE 24000GR" (trade name, manufactured by Lubrizol Japan Corp.) and "SOLSPERSE 22000" (trade name, manufactured by Lubrizol Japan Corp.) as pigment dispersants, and 1,3-butanediol diacetate (solvent, hereinafter abbreviated as 1,3-BGDA) in a ratio shown in the following Table 2. After preliminary mixing, they were dispersed with a motor mill M-50 (manufactured by Eiger Japan Corp.) loaded with zirconia beads having a diameter of 0.65 mm at a filling ratio of 80%, at a circumferential velocity of 9 m/s for 9 hours, so that a pigment dispersion liquid (R1) for red color (R) was prepared. Pigment dispersion liquids (R2), (R3), (R4), (R5), and (R6) for R, pigment dispersion liquids (G1) and (G2) for G, and pigment dispersion liquids (B1) and (B2) for B were each prepared in the same manner as the preparation of the pigment dispersion liquid (R1) for R, except that the pigment, pigment dispersant(s), and solvent were mixed in the ratio shown in the following Table 2.

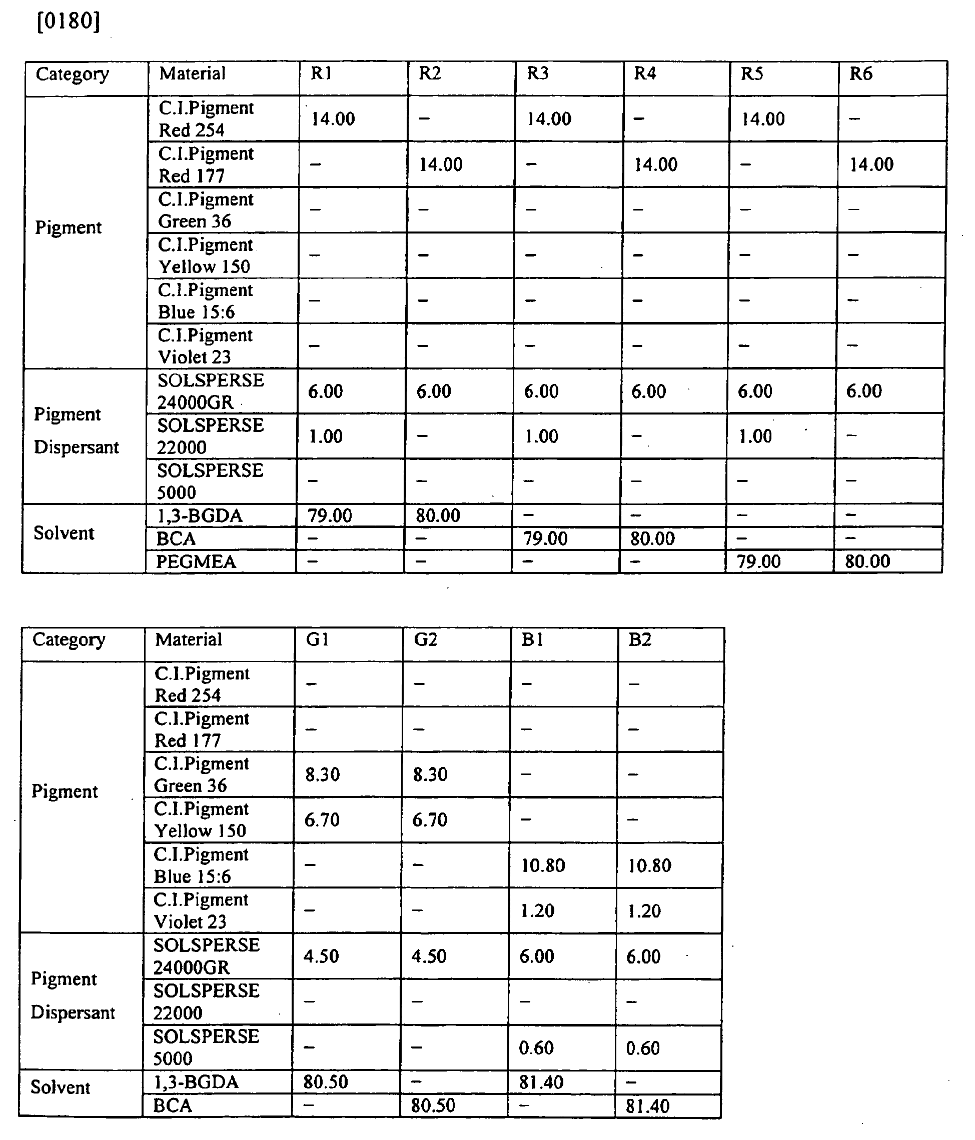

### Preparation of ink-jet ink for R:

Subsequently, in accordance with the formulations shown in the following Table 3, a solvent, a polymerizable monomer, a binder, a surfactant component, a heat-polymerization inhibitor, a curing agent, and a wettability enhancer were mixed and stirred at 25°C for 30 minutes, and absence of insoluble matter was confirmed, so that a monomer solution was prepared. Next, the pigment dispersion liquid (R1) for R and the pigment dispersion liquid (R2) for R were mixed. While the resulting mixed solution was stirred, the foregoing monomer solution was gradually added thereto. After stirring at 25°C for 30 minute, an ink-jet ink for R (ink R-1) was obtained.
Similarly to the preparation of the ink R-1, ink-jet inks for R (ink R-2 to ink R-10) were prepared by changing the mixing components as shown in the following Table 3.

The details of the materials used for the preparation were described below.
C. I. Pigment Red 254 ("IRGAPHOR RED B-CF" (trade name), manufactured by Ciba Specialties Chemicals Inc.),
C. I. Pigment Red 177 ("CROMOPHTAL RED A2B" (trade name), manufactured by Ciba Specialties Chemicals Inc.),
C. I. Pigment Green 36 ("RIONOL GREEN 6YK" (trade name), manufactured by Toyo Ink Mfg. Co., Ltd.),
C. I. Pigment Yellow 150 ("BAYPLAST YELLOW 5GN 01" (trade name), manufactured by Bayer Corp.),
C. I. Pigment Blue 15:6 ("RIONOL BLUE ES" (trade name), manufactured by Toyo Ink Mfg. Co., Ltd.),
C. I. Pigment Violet 23 ("HOSTAPERM VIOLET RL-NF" (trade name), manufactured by Clariant (Japan) K.K.),
DPHA ("KAYARAD DPHA" (trade name), manufactured by Nippon Kayaku Co., Ltd.),
"EPICOAT 157S70" (trade name, manufactured Japan Epoxy Resins Co., Ltd.),
Surfactant 2: a 1,3-BGDA solution containing 1% of the following structure 2,
Wettability enhancer 1: a random copolymer of N,N-diethylamino group/ethylene oxide/propylene oxide with an average composition ratio of 1/11/19,
Wettability enhancer 2: a random copolymer of N,N-diethylamino group/ethylene oxide/propylene oxide with an average composition ratio of 1/17/20,
Wettability enhancer 3: a random copolymer of N,N-dipropylamino group/ethylene oxide/propylene oxide with an average composition ratio of 1/15/6,
Acrylic resin: a propyleneglycol monomethylether acetate solution (having a solid content of 40 wt.%) of a random copolymer of benzyl methacrylate/methacrylic acid (= 78/22 by mol) (having a weight average molecular weight of 38,000),
Binder epoxy resin: a random copolymer of glydicyl methacrylate/cyclohexyl methacrylate (= 6/4 by mol) (having a weight average molecular weight of 9,600),
Carboxyl group-blocked trimellitic acid: prepared by blocking the carboxyl groups of trimellitic acid with n-propylvinyl ether (69.9 % of solid content, solvent: cyclohexanone),
«Synthesis of carboxyl group-blocked trimellitic acid»
   In a four-necked flask equipped with a thermometer, a reflux condenser, a stirrer, and a dropping funnel, 14.5 parts of cyclohexanone, 31.4 parts of 1,2,4-trimellitic acid, and 54.1 parts of n-propylvinyl ether were charged, and heated to 70°C with stirring. Then the resulting reaction mixture was continuously stirred while the temperature was kept at 70°C. When the acid value of the reaction mixture became 3 or less, the reaction was terminated to obtain a carboxylic group-blocked trimellitic acid.
1,6-HDDA: 1,6-hexanediol diacetate (having a boiling point of 260°C, n = 6, total carbon atom number is 10),
TPNB: tripropyleneglycol-n-butyl ether (having a boiling point of 274°C),
BCA: diethyleglycol monobutylether acetate (having a boiling point of 247°C),
PEGMEA: propyleneglycol monomethylether acetate (having a boiling point of 147°C),
1,3-BGDA: 1,3-butanediol diacetate (having a boiling point of 232°C, n = 3, total carbon atom number is 7),
"SOLSPERSE 24000GR" (trade name, manufactured by Lubrizol Japan Corp.),
"SOLSPERSE 22000" (trade name, manufactured by Lubrizol Japan Corp.),
"SOLSPERSE 5000" (trade name, manufactured by Lubrizol Japan Corp.).

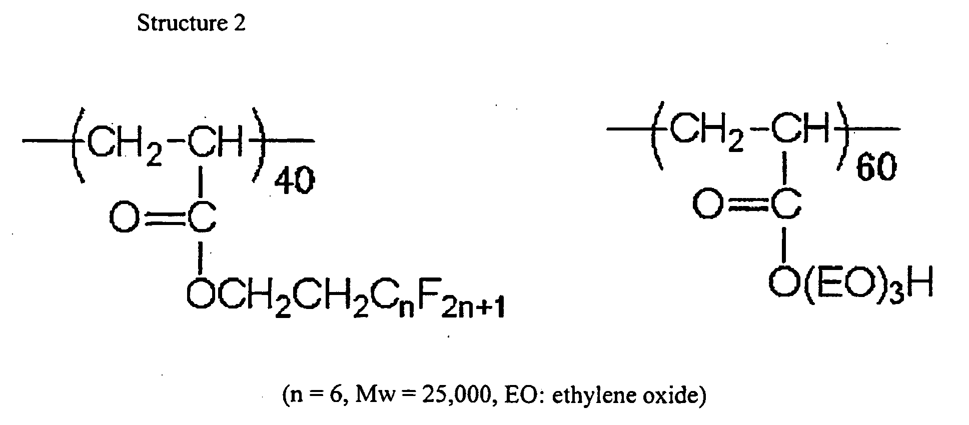

**Table 3**

| Category | Material | Ink R-1 | Ink R-2 | Ink R-3 | Ink R-4 | Ink R-5 | Ink R-6 | Ink R-7 | Ink R-8 | Ink R-9 | Ink R-10 |
|---|---|---|---|---|---|---|---|---|---|---|---|
| | | * | * | * | * | * | * | * | ** | ** | ** |
| Polymerizable Monomer | DPHA | 7.46 | 7.46 | 7.46 | 7.46 | 7.46 | - | - | 7.46 | 7.46 | - |
| | EPICOAT 157S70 | - | - | - | - | - | 5.02 | 5.02 | - | - | 5.02 |
| Heat-polymerization inhibitor | Phenothiazine (0.5% 1,3-BGDA Solution) | 0.75 | 0.75 | 0.75 | 0.75 | 0.81 | - | - | 0.75 | 0.75 | - |
| Surfactant | Surfactant 2 | 2.00 | 2.00 | 2.00 | 2.00 | 2.00 | - | - | 2.00 | 2.00 | - |
| Wettability enhancer | Wettability enhancer 1 | 1.00 | - | - | 1.00 | 1.00 | 1.00 | 1.00 - | | - | - |
| | Wettability enhancer 2 | - | 0.80 | - | - | - | - | - | - | | |
| | Wettability enhancer 3 | - | - | 1.50 | - | - | - | - | - | - | - |
| Binder | Acrylic resin | 2.47 | 2.47 | 2.47 | 2.47 | 2.47 | - | - | 2.47 | 2.47 | - |
| | Binder epoxy resin | - | - | - | - | - | 4.76 | 4.76 | - | - | 4.76 |
| Curing agent | Carboxyl group-blocked trimellitic acid | - | - | - | - | - | 4.42 | 4.42 | - | - | 4.42 |
| Solvent | 1,6-HDDA | 34.89 | 34.89 | | | | | 34.89 | - | - | - |
| | TPNB | - | - | 34.89 - | - | - | 27.96 | - | - | - | - |
| | BCA | - | - | - | 34.89 | - | - | 27.96 | - | 34.89 | 27.96 |
| | PEGMEA | - | - | - | - | 34.89 | - | - | - | - | - |
| Pigment Dispersion liquid | R1 (1,3-BGDA) | 22.63 | 22.63 | 22.63 | - | - | 32.40 | - | 22.63 | - | - |
| | R2 (1,3-BGDA) | 28.80 | 28.80 | 28.80 | - | - | 25.46 | - | 28.80 | - | - |
| | R3 (BCA) | - | - | - | 22.63 - | - | - | 32.40 | - | 22.63 | 32.40 |
| | R4 (BCA) | - | - | - | 28.80 | - | - | 25.46 | - | 28.80 | 25.46 |
| | R5 (PEGMEA) | - | - | - | - | 22.63 | - | - | - | - | - |
| | R6 (PEGMEA) | - | - | - | - | 28.80 | - | - | - | - | - |

| | | | | | | | | | | | |
|---|---|---|---|---|---|---|---|---|---|---|---|
| (*: Present invention, **: Comparative example) | | | | | | | | | | | |

### Formation of pixels (R pixels) by ink-jet system:

Next, ejection of ink droplets conducted in the following manner will be described, using the ink R-1 prepared above.
Ink R-1 droplets were jetted by an ink-jet ink droplet jetting apparatus equipped with a head section having an SE-128 ink-jet head manufactured by Dimatix, Inc. and with an ejection controller having its own piezo-driving circuit and its own stage control circuit. SE-128 is a piezo-driven, on-demand ink-jet head, in which 128 nozzles are disposed with a spacing of 508 µm within a head.
On piezo-driving, the central value of the voltage was set to 100 V and the pulse width was set to 8 microseconds. The voltage of each nozzle was adjusted such that the difference in the amounts of the ejected ink among the nozzles was 2% or less as measured by the observation of the droplet flight form and the measurement of the ejection amount. The central value of the ejection amount was 35 ng/droplet. The flight form observation was conducted by direct observation of the shape of the liquid droplets ejected from nozzles with a high speed video camera. The measurement of the ejection amount was conducted by ejecting ink from each nozzle for a certain time, and dividing the total weight of the ejected ink by the total number of shots calculated from the ejection frequency and the ejection time.

The glass substrate on which a black matrix had been formed in the foregoing process was placed on a substrate table fixed on a dedicated automatic two-dimensional moving stage.
The space between the head and glass substrate was adjusted to 500 µm. The time it took from the driving of the piezo element at the head to the landing of the generated ink droplet on the substrate was about 63 micoroseconds.
The size of each pixel on the substrate was 200 µm in the X direction and 120 µm in the Y direction. The width of the black matrix partitioning the pixels was 45 µm, and the pixel pitch of the same color was 495 µm in the Y direction. The head was inclined with respect to the X direction, so that the apparent nozzle spacing in the Y direction was adjusted to 495 µm.
The piezo-driving frequency was set to 10 kHz in the case of continuous jetting of droplets. While the glass substrate was moved at a constant speed of 8.2 cm/sec, the number of ink droplets deposited on the recessed compartment defined by the black matrix (partition walls) was successively changed starting from one droplet, so that plural pixels having respectively different amounts of the ink droplets deposited thereon were formed.

Thereafter, at least a part of the solvent was removed by heating and drying at 90°C for 2 minutes with a hot plate, and then both of the black matrix (partition walls) and the pixel portions were fully cured by heat treatment at 220 °C in an oven for 30 minutes, so as to form red color (R) pixels. During the formation of the red color pixels, the time it took from the completion of the ink jetting to the first heat drying was set to 600 seconds.

Subsequently, plural red color (R) pixels with respectively different amounts of the deposited ink were prepared for each of the inks R-2 to R-10 in the same manner as in the case of the ink R-1, except that the ink R-1 was replaced by each of the inks R-2 to R-10.

### Evaluation 1:

The plural pixels obtained were subjected to the following evaluations. The results of the evaluations and measurements are shown in the following Table 4.

### 1. Measurement of viscosity and surface tension

### (1-1) Viscosity

The viscosity of the inks R-1 to R-10 obtained were measured with an E-type viscometer (RE-80L) manufactured by Toki Sangyo Co., Ltd. under the following conditions, while these inks were kept at 25°C.

### Measurement conditions:

| | |
|---|---|
| Rotor used for the measurement: | 1° 34' × R24, |
| Measurement time: | 2 minutes, |
| Measurement temperature: | 25°C. |

### (1-2) Surface tension

The surface tension of the inks R-1 to R-10 obtained were measured with a surface tension meter (FACE SURFACE TENSIOMETER CBVB-A3) manufactured by Kyowa Interface Science Co., Ltd. , while these inks were kept at 25°C.

### 2. Measurement of pixel average height

The plural pixels prepared by varying the number of the ink droplets provided thereto were observed with a noncontact surface profile measurement apparatus New View 6K (manufactured by Zygo KK) so as to calculate the profile of the surface morphology thereof. The height of the lowest part was denoted by A and the height of the highest part was denoted by B. The average of A and B was assumed to be an average height. The ink deposition amount that resulted in an average height that was the same height as the height of the black matrix (partition walls) was assumed to be a standard deposition amount. The standard deposition amount was 9 drops or 315 ng in the case of the ink R-1.

### 3. Evaluation of wet-spreading property

### (3-1) Wet-spreading at pixel portions

Based on the above average height of the pixel, wet-spreading property was evaluated according to the following evaluation criteria.

### Evaluation criteria:

A: there was no problem in wet-spreading at a deposition amount that was 0.8 time the deposition amount that gave an pixel average height that was the same as the height of the partition walls,
B: there was no problem in wet-spreading at the deposition amount that gave an pixel average height that was the same as the height of the partition walls, and
C: wet-spreading was insufficient at the deposition amount that gave an pixel average height that was the same as the height of the partition walls.

### (3-2) Wet-spreading of one droplet

### Evaluation criteria:

A: When one droplet of ink was deposited, the diameter of the color portion after drying was 80 µm or more,
B: When one droplet of ink was deposited, the diameter of the color portion after drying was 50 µm or more but less than 80µm, and
C: When one droplet of ink was deposited, the diameter of the color portion after drying was less than 50 µm.

**Table 4**

| | | Ink R-1 | Ink R-2 | Ink R-3 | Ink R-4 | Ink R-5 | Ink R-6 | Ink R-7 | Ink R-8 | Ink R-9 | Ink R-10 |
|---|---|---|---|---|---|---|---|---|---|---|---|
| | | * | * | * | * | * | * | * | ** | ** | ** |
| Ink viscosity (mPa·s) | | 14.2 | 14.0 | 13.6 | 12.8 | 10.6 | 13.5 | 12.5 | 14.0 | 12.7 | 12.4 |
| Surface tension (mN/m) | | 30.6 | 30.5 | 29.7 | 30.1 | 29.2 | 30.6 | 30.1 | 30.7 | 29.3 | 30 |
| Wet-spreading evaluation | Pixel Portion | A | A | A | A | B | A | A | C | C | C |
| | One droplet | A | A | A | A | B | A | A | C | C | C |
| Pixel average height (µm) | | 2.03 | 2.02 | 2.01 | 2.00 | 2.02 | 2.01 | 2.04 | 2.01 | 2.00 | 1.99 |

| | | | | | | | | | | | |
|---|---|---|---|---|---|---|---|---|---|---|---|
| (*: Present invention, **: Comparative example) | | | | | | | | | | | |

### Preparation of ink-jet inks for G and B:

Next, in accordance with the formulations shown in the following Tables 5 to 6, monomer solutions were prepared in the same manner as the preparation of the ink-jet ink R-1. The resulting monomer solutions were mixed with pigment dispersion liquids so as to prepare ink-jet inks for G (inks G-1 to G-6) and ink-jet inks for B (inks B-1 to B-6).

### Preparation of pixels (G pixels, B pixels) by ink-jet system:

Each of the obtained inks was deposited in the same manner as in the case of the ink R-1 described above, such that plural green color (G) pixels having respectively different ink deposition amounts were produced for each of the inks G-1 to G-6 and such that plural blue color (B) pixels having respectively different ink deposition amounts were produced for each of the inks B-1 to B-6 Further, the same evaluations and measurements as in the case of the R pixels formed by using the ink R-1 were conducted. The results of the evaluations and measurements are shown in the following Tables 5 to 6.

**Table 5**

| Category | Material | Ink G-1 | Ink G-2 | Ink G-3 | Ink G-4 | Ink G-5 | Ink G-6 |
|---|---|---|---|---|---|---|---|
| | | * | * | * | ** | ** | ** |
| Polymerizable monomer | DPHA | 8.10 | 8.10 | - | 8.10 | 8.10 | - |
| | EPICOAT 157S70 | - | - | 6.38 | - | - | 6.38 |
| Polymerization inhibitor | Phenothiazine (0.5% 1,3-BGDA solution) | 0.81 | 0.81 | - | 0.81 | 0.81 | - |
| Surfactant | Surfactant 2 | 2.00 | 2.00 | - | 2.00 | 2.00 | - |
| Wettability enhancer | Wettability enhancer 2 | 1.00 | 1.00 | 1.00 | None | None | None |
| Binder | Acrylic resin | 2.47 | 2.47 | - | 2.47 | 2.47 | - |
| | Binder epoxy resin | - | - | 4.76 | - | - | 4.76 |
| Curing agent | Carboxyl group-blocked trimellitic acid | - | - | 5.62 | - | - | 5.62 |
| Solvent | TPNB | - | - | - | - | - | - |
| | 1,6-HDDA | 34.96 | - | - | 34.96 | - | - |
| | BCA | - | 34.96 | - | - | 34.96 | - |
| Pigment dispersion liquid | G1(1,3-BGDA) | 50.67 | - | - | 50.67 | - | - |
| | G2(BCA) | - | 50.67 | 50.00 | - | 50.67 | 50.00 |
| Ink viscosity (mPa·s) | | 13.8 | 13.1 | 13.5 | 13.7 | 13 | 13.4 |
| Surface tension (mN/m) | | 30.9 | 29.4 | 30.0 | 30.7 | 29.6 | 29.9 |
| Wet-spreading evaluation | Pixel portion | A | A | A | C | C | C |
| | One drop | A | A | A | C | C | C |
| Pixel average height (µm) | | 2.01 | 2.00 | 2.02 | 2.01 | 1.98 | 2.01 |

| | | | | | | | |
|---|---|---|---|---|---|---|---|
| (*: Present invention, **: Comparative example) | | | | | | | |

**Table 6**

| Category | Material | Ink B-1 | Ink B-2 | Ink B-3 | Ink B-4 | Ink B-5 | Ink B-6 |
|---|---|---|---|---|---|---|---|
| | | * | * | * | ** | ** | ** |
| Polymerizable monomer | DPHA | 10.53 | 10.53 | - | 10.53 | 10.53 | - |
| | EPICOAT 157S70 | - | - | 7.16 | - | - | 7.16 |
| Polymerization inhibitor | Phenothiazine (0.5% 1,3-BGDA solution) | 1.05 | 1.05 | - | 1.05 | 1.05 | - |
| Surfactant | Surfactant 2 | 2.00 | 2.00 | - | 2.00 | 2.00 | - |
| Wettability enhancer | Wettability enhancer 2 | 1.00 | 1.00 | 1.00 | None | None | None |
| Binder | Acrylic resin | 2.47 | 2.47 | - | 2.47 | 2.47 | - |
| | Binder epoxy resin | - | - | 4.74 | - | - | 4.74 |
| Curing agent | Carboxyl group-blocked trimellitic acid | - | - | 6.30 | - | - | 6.30 |
| Solvent | TPNB | - | - | - | - | - | - |
| | 1,6-HDDA | 42.94 | - | - | 42.94 | - | - |
| | BCA | - | 42.94 | - | - | 42.94 | - |
| Pigment dispersion liquid | B1(1,3-BGDA) | 40.00 | - | - | 40.00 | - | - |
| | B2(BCA) | - | 40.00 | 45.00 | - | 40.00 | 45.00 |
| Ink viscosity (mPa·s) | | 14.0 | 13.4 | 13.7 | 13.8 | 13.3 | 13.5 |
| Surface tension (mN/m) | | 30.7 | 29.6 | 30.2 | 30.5 | 29.7 | 30.1 |
| Wet-spreading evaluation | Pixel portion | A | A | A | C | C | C |
| | One drop | A | A | A | C | C | C |
| Pixel average height (µm) | | 2.01 | 1.99 | 2.00 | 2.01 | 2.02 | 1.99 |

| | | | | | | | |
|---|---|---|---|---|---|---|---|
| (*: Present invention, **: Comparative example) | | | | | | | |

### Preparation of color filter:

By using each of the ink sets 1 to 6 shown in the following Table 7, the inks were deposited on recessed portions comparted with the black matrix (partition walls) on the glass substrate, to which the ink repellent plasma treatment had been conducted. Each ink set consisted of the ink-jet inks for R, G, and B shown in the following Table 7. The ink deposition was conducted by using an ink-jet ink droplet jetting apparatus equipped with a head section having three SE-128 ink-jet head members manufactured by Dimatix, Inc., which served as ink-jet heads for the three colors, and with an ejection controller having its own piezo-driving circuit and its own stage control circuit. The conditions for the ink deposition were the same as the droplet jetting conditions described above in the section of "Formation of pixels (R pixels) by ink-jet system". The ink deposition amount was adjusted such that the average height of the pixel portion formed by each ink was equal to the partition wall height.
Then, in the same manner as the process described in the above section of "Formation of pixels (R pixels) by ink-jet system", after heating and drying at 90°C for 2 minutes with a hot plate, another heating treatment was conducted for 30 minutes in a 220°C oven to cure the inks, so that color filters (CF 1 to 6, hereinafter referred to as "color filter substrate") with RGB pixels formed therein were prepared.

**Table 7**

| | Ink for R | Ink for G | Ink for B | Remarks |
|---|---|---|---|---|
| Ink set 1 | R-1 | G-1 | B-1 | Present invention (CF1) |
| Ink set 2 | R-4 | G-2 | B-2 | Present invention (CF2) |
| Ink set 3 | R-7 | G-3 | B-3 | Present invention (CF3) |
| Ink set 4 | R-8 | G-4 | B-4 | Comparative example (CF4) |
| Ink set 5 | R-9 | G-5 | B-5 | Comparative example (CF5) |
| Ink set 6 | R-10 | G-6 | B-6 | Comparative example (CF6) |

### Fabrication of liquid crystal display device:

For each of the color filter substrates (CF1 to 6) obtained above, an ITO (Indium Tin Oxide) transparent electrode was formed on the R pixels, G pixels, B pixels, and the black matrix (partition walls) by sputtering. Separately, a glass substrate that served as a counter substrate was prepared, and a patterning for PVA mode was applied on the transparent electrode of the color filter substrate and on the counter substrate respectively.
A photo-spacer was disposed on the ITO transparent electrode only at portions directly above the black matrix (partition wall) such that the photo-spacer and the black matrix have similar shapes and form an overlapping pattern in plan view. An orientation film made of polyimide was further disposed thereon.
Thereafter, a sealing agent of a UV-light setting resin was coated, by using a dispenser system, at a portion corresponding to the outer frame of the partition wall which was formed on the periphery of the group of color filter pixels and which surrounded the group of color filter pixels. After a liquid crystal for PVA mode was dropped, the color filter substrate and the counter substrate were adhered to each other. Then, the adhered substrates were irradiated with UV-light and were subjected to heat treatment so as to cure the sealing agent. On either side of the liquid crystal cell thus obtained, a polarizer "HLC2-2518" (trade name) manufactured by Sanritz Corp. was adhered. Then, a backlight having a cold cathode ray tube was fabricated and disposed on the rear side of the liquid crystal cell having the polarizers, so that liquid crystal display devices 1 to 6 were fabricated.

### Evaluation 2:

The resulting color filters and liquid crystal display devices were subjected to the following evaluations. The results are shown in the following Table 8.

### 4. Evaluation of color irregularities of color filter

For each of the red color (R) pixel, the green color (G) pixel, and the blue color (B) pixel of the color filter obtained, the presence or absence of concentration irregularity within one pixel was inspected visually with an optical microscope.

### Evaluation criteria:

A: no color irregularities were observed in both reflection and transmission images,
B: no reflection irregularity was observed in the transmission image, but moderate color irregularities were observed in the reflection image, and
C: color irregularities were observed in the transmission image.

### Evaluation of color irregularities of liquid crystal display devices

Each of the liquid crystal display devices 1-6 obtained was allowed to display a gray image, and color irregularities were evaluated by visual observation in accordance with the following evaluation criteria.

### Evaluation Criteria:

A: no color irregularities were observed,
B: slight color irregularities were observed, and
C: color irregularities were observed clearly.

**Table 8**

| Color filter | | Liquid crystal display device | |
|---|---|---|---|
| No. | Color irregularities | No. | Color irregularities |
| CF1 (Present invention) | A | 1 (Present invention) | A |
| CF2 (Present invention) | A | 2 (Present invention) | A |
| CF3 (Present invention) | A | 3 (Present invention) | A |
| CF4 (Comparative example) | C | 1 (Comparative example) | C |
| CF5 (Comparative example) | C | 2 (Comparative example) | C |
| CF6 (Comparative example) | C | 3 (Comparative example) | C |

When a film was formed by the ink-jet system on a glass substrate having no black matrix (partition walls), the inks R1 to R7, the inks G1 to G3, and the inks B1 to B3 described in the above Examples in accordance with the present invention exhibited an excellent wet-spreading property similarly to the case where these inks were ejected onto a substrate having a black matrix (partition wall), and provided a film with no color irregularities as compared to the case where the inks R8 to R10, the inks G4 to G6, and the inks B4 to B6 of Comparative Examples were used.

As is clear from Tables 4 to 6 and Table 8, the ink-jet ink of the present invention exhibited an excellent wet-spreading in recessed portions enclosed by a black matrix (partition wall). Further, a color filter that was formed by using the ink-jet ink of the present invention was found to have less occurrence of color irregularities and uncolored portions. In addition, a liquid crystal display device that was fabricated by using the color filter of the present invention showed less generation of color irregularities and uncolored portions and was excellent in display quality. Still further, when a film was formed by an ink-jet system using the ink-jet ink of the present invention, a film free of irregularities could be formed.

## Claims

1. An ink-jet ink used for forming a functional film by ejecting an ink droplet to a non-penetrative substrate using an ink-jet system, the ink-jet ink comprising a compound having an amino group and an alkylene glycol portion within a molecule, wherein the compound serves as a wettability enhancer, and wherein said amino group is represented by the following Formula (1): 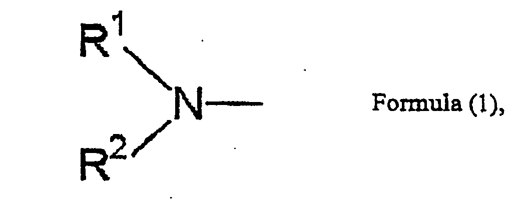 wherein, in Formula (1), R¹ and R² each independently represent
an alkyl group having 1 to 8 carbon atoms, an aralkyl group having 7 to 15 carbon atoms, an aryl group having 6 to 15 carbon atoms, an alkenyl group having 1 to 8 carbon atoms, or an alkynyl group having 1 to 8 carbon atoms, each of which may be substituted by an alkyl group having 1 to 4 carbon atoms, a halogen atom, or an alkoxy group having 1 to 4 carbon atoms; and R¹ and R² may be connected by an alkylene group or an alkoxyalkylene group to form a ring structure.

2. The ink-jet ink according to claim 1, wherein the alkylene glycol portion is ethylene glycol and/or propylene glycol.

3. The ink-jet ink according to claim 1, wherein the compound is an open-ring copolymer of ethylene oxide and/or propylene oxide having an amino group at a terminal.

4. The ink-jet ink according to claim 1, further comprising a solvent and a colorant.

5. The ink-jet ink according to claim 4, wherein at least 70% by mass of the total amount of the solvent is an alkane diol derivative represented by the following Formula (2):
Formula (2): A-O-(CₘH₂ₘ-O)ₙ-B,
wherein, in Formula (2), m represents an integer of from 2 to 7; n represents an integer of from 1 to 4; A and B each independently represent a hydrogen atom, an alkyl 62 group, having 1 to 4 carbon atoms, or an acetyl group; the total number of the carbon atoms of the derivative is 12 or less; A and B may be the same or different; and A and B are not simultaneously hydrogen atoms.

6. The ink-jet ink according to claim 1, further comprising a polymerizable monomer, wherein the polymerizable monomer is at least one selected from the group consisting of a (meth)acrylic monomer, an epoxy monomer, and an oxetanyl monomer.

7. The ink-jet ink according to claim 1, wherein the viscosity of the ink-jet ink is from 5 mPa·s to 50 mPa·s at 25°C.

8. The ink-jet ink according to claim 1, wherein the ink-jet ink is used to form a color filter by ejecting ink droplets using an ink-jet system onto recessed portions comparted with partition walls formed on a substrate, and at least a part of the functional film is a color film.

9. A method of producing a color filter comprising:
ejecting the ink-jet ink according to claim 1 using an ink-jet system onto recessed portions comparted with partition walls formed on a substrate so as to form a functional film.

10. The method of producing a color filter according to claim 9, further comprising, after ejecting the ink-jet ink onto the recessed portions using an ink-jet system, removing at least a part of an organic solvent contained in the ink-jet ink, and then polymerizing and curing the functional film by irradiation with an active energy ray and/or heating.

11. A color filter prepared by the method of producing a color filter according to claim 9.

12. A display device comprising the color filter according to claim 11.

13. A method of producing the ink-jet ink according to claim 1, wherein the compound having an amino group and an alkylene glycol portion within a molecule is added after dispersing a pigment.

14. A method of forming a functional film comprising:
ejecting the ink-jet ink according to claim 1 onto a non-penetrative substrate using an ink-jet system; and
evaporating at least a part of a solvent, so as to form a functional film.

## Patentansprüche

1. Tintenstrahltinte, die zur Bildung eines funktionellen Films durch Ausstossen eines Tintentropfens auf ein nicht-penetratives Substrat unter Verwendung eines Tintenstrahlsystems verwendet wird, wobei die Tintenstrahltinte eine Verbindung umfasst, die innerhalb eines Moleküls eine Aminogruppe und einen Alkylenglykolteil aufweist, wobei die Verbindung als Benetzbarkeitsverbesserer dient und worin die Aminogruppe durch die folgende Formel (1) dargestellt wird: 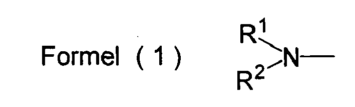 worin in Formel (1) R¹ und R² jeweils unabhängig voneinander eine Alkylgruppe mit 1 bis 8 Kohlenstoffatomen, eine Aralkylgruppe mit 7 bis 15 Kohlenstoffatomen, eine Arylgruppe mit 6 bis 15 Kohlenstoffatomen, eine Alkenylgruppe mit 1 bis 8 Kohlenstoffatomen oder eine Alkinylgruppe mit 1 bis 8 Kohlenstoffatomen darstellen, von denen jede mit einer Alkylgruppe mit 1 bis 4 Kohlenstoffatomen, einem Halogenatom oder einer Alkoxygruppe mit 1 bis 4 Kohlenstoffatomen substituiert sein kann, und R¹ und R² durch eine Alkylengruppe oder eine Alkoxyalkylengruppe miteinander verbunden sein können, um eine Ringstruktur zu bilden.

2. Tintenstrahltinte gemäss Anspruch 1, worin der Alkylenglykolteil Ethylenglykol und/oder Propylenglykol ist.

3. Tintenstrahltinte gemäss Anspruch 1, worin die Verbindung ein Ringöffnungs-Copolymer von Ethylenoxid und/oder Propylenoxid mit einer endständigen Aminogruppe ist.

4. Tintenstrahltinte gemäss Anspruch 1, ferner umfassend ein Lösungsmittel und ein Färbemittel.

5. Tintenstrahltinte gemäss Anspruch 4, worin mindestens 70 Masse-% der Gesamtmenge des Lösungsmittels von einem Alkandiolderivat gebildet werden, das durch die folgende Formel (2) dargestellt wird:
Formel (2) A-O-(CₘH₂ₘ-O)ₙ-B
worin in Formel (2) m eine ganze Zahl von 2 bis 7 darstellt; n eine ganze Zahl von 1 bis 4 darstellt; A und B jeweils unabhängig voneinander ein Wasserstoffatom, eine Alkylgruppe mit 1 bis 4 Kohlenstoffatomen oder eine Acetylgruppe darstellen; die Gesamtanzahl der Kohlenstoffatome des Derivats 12 oder weniger beträgt; A und B gleich oder verschieden sein können; und A und B nicht gleichzeitig Wasserstoffatome sind.

6. Tintenstrahltinte gemäss Anspruch 1, ferner umfassend ein polymerisierbares Monomer, worin das polymerisierbare Monomer mindestens eines ist, das ausgewählt ist aus der Gruppe bestehend aus einem (Meth)acrylmonomer, einem Epoxymonomer und einem Oxetanylmonomer.

7. Tintenstrahltinte gemäss Anspruch 1, worin die Viskosität der Tintenstrahltinte 5 bis 50 mPa·s bei 25°C beträgt.

8. Tintenstrahltinte gemäss Anspruch 1, worin die Tintenstrahltinte verwendet wird, um einen Farbfilter zu bilden, indem Tintentropfen unter Verwendung eines Tintenstrahlsystems auf vertiefte Bereiche, die durch Abschnittswände abgetrennt sind, die auf einem Substrat gebildet sind, ausgestossen werden und mindestens ein Teil des funktionellen Films ein Farbfilm ist.

9. Verfahren zur Herstellung eines Farbfilters, umfassend:
Ausstossen der Tintenstrahltinte gemäss Anspruch 1 unter Verwendung eines Tintenstrahlsystems auf vertiefte Bereiche, die durch Abschnittswände abgetrennt sind, die auf einem Substrat gebildet sind, um einen funktionellen Film zu bilden.

10. Verfahren zur Herstellung eines Farbfilters gemäss Anspruch 9, ferner umfassend das Entfernen von zumindest einem Teil eines organischen Lösungsmittels, das in der Tintenstrahltinte enthalten ist, nach dem Ausstossen der Tintenstrahltinte auf die vertieften Bereiche unter Verwendung eines Tintenstrahlsystems, und dann Polymerisieren und Härten des funktionellen Films durch Bestrahlung mit aktiver Energiestrahlung und/oder durch Erwärmen.

11. Farbfilter, hergestellt durch das Verfahren zur Herstellung eines Farbfilters gemäss Anspruch 9.

12. Anzeigevorrichtung, umfassend den Farbfilter gemäss Anspruch 11.

13. Verfahren zur Herstellung der Tintenstrahltinte gemäss Anspruch 1, worin die Verbindung, die innerhalb eines Moleküls eine Aminogruppe und einen Alkylenglykolteil aufweist, nach dem Dispergieren eines Pigments zugegeben wird.

14. Verfahren zur Bildung eines funktionellen Films, umfassend:
Ausstossen der Tintenstrahltinte gemäss Anspruch 1 auf ein nicht-penetratives Substrat unter Verwendung eines Tintenstrahlsystems; und
Verdampfen von mindestens einem Teil eines Lösungsmittels, um so einen funktionellen Film zu bilden.

## Revendications

1. Encre pour jet d'encre utilisée pour former un film fonctionnel par éjection d'une gouttelette d'encre vers un substrat non pénétrant en utilisant un système à jet d'encre, l'encre pour jet d'encre comprenant un composé ayant un groupe amino et une partie alkylène glycol au sein d'une molécule, dans laquelle le composé sert de renforçateur de mouillabilité, et dans laquelle ledit groupe amino est représenté par la Formule (1) suivante : 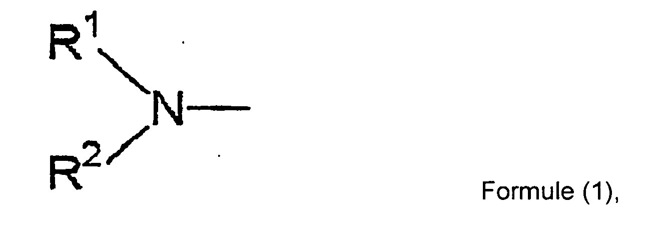 dans laquelle, dans la Formule (1) dans laquelle R¹ et R² représentent chacun indépendamment un groupe alkyle ayant 1 à 8 atomes de carbone, un groupe aralkyle ayant 7 à 15 atomes de carbone, un groupe aryle ayant 6 à 15 atomes de carbone, un groupe alcényle ayant 1 à 8 atomes de carbone, ou un groupe alcynyle ayant 1 à 8 atomes de carbone, chacun d'eux pouvant être substitué par un groupe alkyle ayant 1 à 4 atomes de carbone, un atome d'halogène, ou un groupe alcoxy ayant 1 à 4 atomes de carbone ; et R¹ et R² peuvent être reliés par un groupe alkylène ou un groupe alcoxyalkylène pour former une structure cyclique.

2. Encre pour jet d'encre selon la revendication 1, dans laquelle la partie alkylène glycol est de l'éthylène glycol et/ou du propylène glycol.

3. Encre pour jet d'encre selon la revendication 1, dans laquelle le composé est un copolymère à cycle ouvert d'oxyde d'éthylène et/ou d'oxyde de propylène, ayant un groupe amino à une extrémité.

4. Encre pour jet d'encre selon la revendication 1, comprenant en outre un solvant et un colorant.

5. Encre pour jet d'encre selon la revendication 4, dans laquelle au moins 70 % en masse de la quantité totale du solvant est un dérivé alcane diol représenté par la Formule (2) suivante :
Formule (2) : A-O-(CₘH₂ₘ-O)ₙ-B,
dans laquelle, dans la Formule (2), m représente un nombre entier compris entre 2 et 7 ; n représente un nombre entier compris entre 1 et 4 ; A et B représentent chacun indépendamment un atome d'hydrogène, un groupe alkyle ayant 1 à 4 atomes de carbone, ou un groupe acétyle ; le nombre total des atomes de carbone du dérivé est 12 ou inférieur ; A et B peuvent être les mêmes ou différents ; et A et B ne représentent pas simultanément des atomes d'hydrogène.

6. Encre pour jet d'encre selon la revendication 1, comprenant en outre un monomère polymérisable, dans laquelle le monomère polymérisable est au moins un monomère sélectionné dans le groupe constitué par un monomère (méth)acrylique, un monomère époxy et un monomère oxétanyle.

7. Encre pour jet d'encre selon la revendication 1, la viscosité de l'encre pour jet d'encre est de 5 mPa·s à 50 mPa·s à 25 °C.

8. Encre pour jet d'encre selon la revendication 1, l'encre pour jet d'encre étant utilisée pour former un filtre coloré par éjection de gouttelettes d'encre en utilisant un système à jet d'encre sur des parties en creux compartimentées par des parois de séparation formées sur un substrat, et au moins une partie du film fonctionnel est un film en couleur.

9. Procédé de production d'un filtre coloré comprenant :
l'éjection de l'encre pour jet d'encre selon la revendication 1 en utilisant un système à jet d'encre sur des parties en creux compartimentées par des parois de séparation formées sur un substrat de manière à former un film fonctionnel.

10. Procédé de production d'un filtre coloré selon la revendication 9, comprenant en outre, après éjection de l'encre pour jet d'encre sur les parties en creux en utilisant un système à jet d'encre, l'élimination d'au moins une partie d'un solvant organique contenu dans l'encre pour jet d'encre, et puis la polymérisation et le durcissement du film fonctionnel par irradiation avec un rayonnement à énergie active et/ou par chauffage.

11. Filtre coloré préparé par le procédé de production d'un filtre coloré selon la revendication 9.

12. Dispositif d'affichage comprenant le filtre coloré selon la revendication 11.

13. Procédé de production de l'encre pour jet d'encre selon la revendication 1, dans lequel le composé ayant un groupe amino et une partie alkylène glycol au sein d'une molécule est ajouté après dispersion d'un pigment.

14. Procédé de formation d'un film fonctionnel comprenant :
l'éjection de l'encre pour jet d'encre selon la revendication 1 sur un substrat non pénétrant en utilisant un système à jet d'encre ; et
l'évaporation d'au moins une partie d'un solvant de manière à former un film fonctionnel.
